# EUROPEAN PATENT SPECIFICATION

(11) **EP 4 068 903 B1**
(45) Date of publication and mention of the grant of the patent: **13.08.2025**
(21) Application number: 20909801.1
(22) Date of filing: 29.12.2020
(51) Int. Cl.: H05B 1/02, H05B 6/06, H05B 6/12

(54) **HEATING CIRCUIT**
HEIZKREIS
CIRCUIT DE CHAUFFAGE

(30) Priority: 31.12.2019 CN 201911417898; 31.12.2019 CN 201911417576; 31.12.2019 CN 201911416405
(43) Date of publication of application: 05.10.2022
(73) Proprietor: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: ZUO, Yuanyang, Foshan, Guangdong 528311 (CN); YIN, Kunren, Foshan, Guangdong 528311 (CN); HOU, Junfeng, Foshan, Guangdong 528311 (CN); WU, Lianghao, Foshan, Guangdong 528311 (CN); YU, Sanying, Foshan, Guangdong 528311 (CN)
(74) Representative: Whitlock, Holly Elizabeth Ann
(86) International application number: PCT/CN2020/141094
(87) International publication number: WO 2021/136306

(56) References cited:
- CN-A- 101 309 529
- CN-A- 107 438 299
- CN-A- 110 049 588
- CN-B- 106 100 110
- CN-U- 201 657 346
- CN-U- 209 562 837
- JP-A- 2014 093 125
- JP-A- 2018 181 714
- JP-A- S63 168 118

## Description

### TECHNICAL FIELD

The application relates to the technical field of electronics, and in particular to a heating circuit.

### BACKGROUND

Before heating a home appliance, impedance of a heating element of the home appliance may be detected to determine whether a cooking device such as a pan or another cookware is present on the heating element, thereby reducing occurrence of heating when the cooking device or the like is not present on the heating element. A heating circuit providing a heating current and a detection loop detecting presence or absence of the cooking device or the like on the heating element may be required to be connected to the heating element. Therefore, the heating circuit and the detection loop may affect each other, which may induce occurrence of situations such as inaccurate detection of the impedance of the heating element, an excessive current on the heating element, or the like. JPS63168118A relates generally to a rice cooker with a warning device that uses display means to alert the user if the inner pot is not set in the outer housing. CN106100110B relates generally to a short-circuit protection method for the automatic switching of emergency power supply of zinc pot inductors. CN209562837U relates generally to a control circuit of an electromagnetic heating system, which can determine the natural frequency of the pot and the resonant heating circuit in the electromagnetic heating system.

### SUMMARY

Aspects of the invention are set out in the claims. In the following, each of the described method, apparatuses, embodiments, examples, and aspects, which do not fully correspond to the invention as defined in the claims is thus not according to the invention and is, as well as the whole following description, present for illustration proposes only or to highlight specific aspects or features of the claims. In view of the above, embodiments of the application provide a heating circuit.

Technical solutions of embodiments of the application are implemented as follows.

An embodiment of the application provides a heating circuit, including an inverter circuit, at least one sub-circuit, a first power supply and a second power supply. The sub-circuit includes a switch module, a heating element and a detection element.

The switch module is connected to the heating element and the detection element, respectively.

In response to the switch module being placed in a first switch state, the first power supply, the inverter circuit and the heating element are connected to form a first conduction loop, the first power supply supplies power to the heating element through the first conduction loop, and the heating element generates heat based on the power supplied by the first power supply.

In response to the switch module being placed in a second switch state, the second power supply, the detection element and the heating element are connected to form a second conduction loop, and the second power supply supplies power to the heating element and the detection element through the second conduction loop.

According to the heating circuit provided in the embodiment of the application, the switch module is connected to the heating element and the detection element, respectively. When the switch module is placed in the first switch state, it is implemented that the first power supply, the inverter circuit and the heating element are connected to form the first conduction loop (i.e., a heating loop), the first power supply supplies power to the heating element through the first conduction loop, and the heating element generates heat based on the power supplied by the first power supply. When the switch module is placed in the second switch state, it is implemented that the second power supply, the detection element and the heating element are connected to form the second conduction loop (i.e., a detection loop), and the second power supply supplies power to the heating element and the detection element through the second conduction loop.

Therefore, the embodiment of the application may allow the heating circuit not to detect the detection element when its heats the heating element, or allow the heating circuit not to heat the heating element when it detects the detection element, so that the first conduction loop and the second conduction loop do not affect each other. That is, the embodiment of the application allows the heating circuit not to be affected by the second power supply when it heats the heating element, which greatly reduces occurrence of excessive current on the heating element due to heating of the heating element by the second power supply, or allows the heating circuit not to be affected by the first power source when it detects the impedance of the heating element, thereby improving the accuracy of detecting presence of the impedance on the heating element.

An example of the application further provides a heating circuit, including an inverter circuit, at least one sub-circuit, a first power supply and a second power supply.

The sub-circuit includes a first switch element, a second switch element, a heating element and a detection element.

The heating element and the detection element are connected in parallel between a first node connected to the first power supply and a second node connected to a ground point, the first switch element is connected between the first node and the first power supply, and the second switch element is connected between the second node and the ground point.

In response to both the first switch element and the second switch element being turned on, the first power supply, the inverter circuit and the heating element are connected to form a first conduction loop, the first power supply supplies power to the heating element through the first conduction loop, and the heating element generates heat based on the power supplied by the first power supply.

In response to both the first switch element and the second switch element being turned off, the second power supply, the detection element and the heating element are connected to form a second conduction loop, and the second power supply supplies power to the heating element and the detection element through the second conduction loop.

According to the heating circuit provided in the example of the application, turning on or off the first switch element and the second switch element determines turning on or off the first conduction loop formed by connecting the first power supply, the inverter circuit and the heating element, or turning on or off the second conduction loop formed by connecting the second power supply, the detection element and the heating element (that is, achieves mutual isolation of the first conduction loop from the second conduction loop). Therefore, the second power supply is not affected by the first power supply when it detects the heating element through the second conduction loop, which improves the accuracy of detecting presence or absence of the impedance on the heating element. Furthermore, the first power supply is not affected by the second power supply when it heats the heating element through the first conduction loop, which greatly reduces effect of excessive current on the heating element due to heating of the heating element by the second power supply.

An example of the application further provides a heating circuit, including an inverter circuit, a first switch component, a second switch component, a heating element, a detection circuit, a first power supply and a second power supply.

A first terminal of the first switch component is connected to a first terminal of the heating element, a second terminal of the first switch component is connected to a first terminal of the inverter circuit, and a third terminal of the first switch component is connected to a first terminal of the detection circuit.

A first terminal of the second switch component is connected to a second terminal of the heating element, a second terminal of the second switch component is connected to a second terminal of the inverter circuit, and a third terminal of the second switch component is connected to a second terminal of the detection circuit.

In response to the first terminal of the first switch component being connected to the second terminal of the first switch component and the first terminal of the second switch component being connected to the second terminal of the second switch component, the first power supply, the heating element and the inverter circuit form a first loop, the first power supply supplies power to the heating element through the first loop, and the heating element generates heat based on the power supplied by the first power supply.

In response to the first terminal of the first switch component being connected to the third terminal of the first switch component and the first terminal of the second switch component being connected to the third terminal of the second switch component, the second power supply, the detection circuit and the heating element form a second loop, the second power supply supplies power to the heating element and the detection circuit through the second loop.

According to the heating circuit provided in the example of the application, turning on or off the first switch component and the second switch component between the inverter circuit and the heating element determines turning on or off the first loop formed by connecting the first power supply, the inverter circuit and the heating element, or turning on or off the second loop formed by connecting the second power supply, the detection element and the heating element, so that the first loop is turned on while the second loop is turned off, and the first loop is turned off while the second loop is turned on (that is, mutual isolation of the first loop from the second loop). Therefore, the second power supply is not affected by the first power supply when it detects the heating element through the second loop, which improves the accuracy of detecting the impedance of the heating element. Furthermore, the first power supply is not affected by the second power supply when it heats the heating element through the first loop, which greatly reduces occurrence of excessive current on the heating element due to heating of the heating element by the second power supply.

### BRIEF DESCRIPTION OF THE DRAWINGS

FIG. 1 is a schematic structural diagram of an optional composition of a heating circuit according to an embodiment of the application.
FIG. 2 is a schematic structural diagram of an optional composition of a heating circuit according to an embodiment of the application.
FIG. 3 is a schematic structural diagram of an optional composition of a heating circuit according to an embodiment of the application.
FIG. 4 is a schematic structural diagram of an optional composition of a heating circuit according to an embodiment of the application.
FIG. 5 is a schematic diagram of a heating circuit according to an embodiment of the application.
FIG. 6 is a schematic diagram of a heating circuit according to an embodiment of the application.
FIG. 7 is a schematic structural diagram of an optional composition of a heating circuit according to an example of the application.
FIG. 8 is a schematic structural diagram of an optional composition of a heating circuit according to an example of the application.
FIG. 9 is a schematic structural diagram of an optional composition of a heating circuit according to an example of the application.

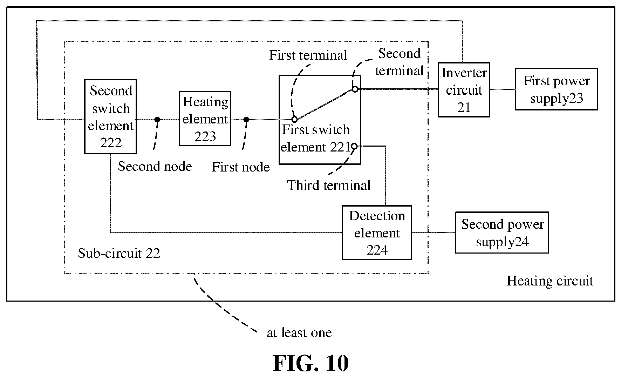

FIG. 10 is a schematic structural diagram of an optional composition of a heating circuit according to an example of the application.
FIG. 11 is a schematic diagram of a heating circuit according to an example of the application.
FIG. 12 is a schematic diagram of a heating circuit according to an example of the application.
FIG. 13 is a schematic structural diagram of an optional composition of a heating circuit according to an example of the application.
FIG. 14 is a schematic structural diagram of an optional composition of a heating circuit according to an example of the application.
FIG. 15 is a schematic structural diagram of an optional composition of a heating circuit according to an example of the application.
FIG. 16 is a schematic diagram of a detection circuit in a heating circuit according to an example of the application.
FIG. 17 is a schematic diagram of a detection circuit in a heating circuit according to an example of the application.
FIG. 18 is a schematic diagram of a heating circuit according to an example of the application.
FIG. 19 is a schematic diagram of a heating circuit according to an example of the application.
FIG. 20 is a schematic structural diagram of an optional composition of a heating circuit according to an example of the application.

### DETAILED DESCRIPTION

The application is further described in detail below with reference to the drawings and embodiments. It should be understood that specific embodiments described here are merely intended to explain the application and are not intended to limit the application.

Unless defined otherwise, all technical and scientific terms used here have the same meaning as generally understood by those skilled in the art of the application. The terms used in the description of the application are merely intended to describe the specific embodiments and are not intended to limit the application. A term "and/or" used here includes any and all combinations of one or more related listed items; here "multiple" is greater than or equal to 2. In the descriptions of the application, it should be noted that unless clearly specified or defined otherwise, terms "install", "connect...to" and "connect" should be understood broadly, for example, they may refer to fixed connection, detachable connection, or integrated connection; they may refer to direct connection, or indirect connection through an intermediate medium, or communication within two elements. Specific meaning of the above terms in the application may be understood by those of ordinary skill in the art according to specific circumstances.

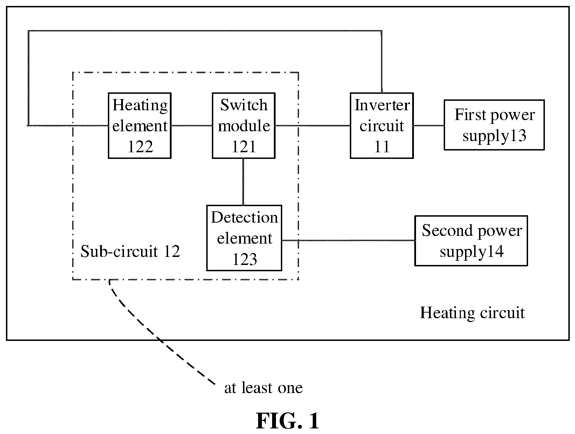

As shown in FIG. 1, an embodiment of the application provides a heating circuit, including an inverter circuit 11, at least one sub-circuit 12, a first power supply 13 and a second power supply 14. The sub-circuit includes a switch module 121, a heating element 122 and a detection element 123.

The switch module 121 is connected to the heating element 122 and the detection element 123, respectively.

In response to the switch module 121 being placed in a first switch state, the first power supply 13, the inverter circuit 11 and the heating element 122 are connected to form a first conduction loop, the first power supply supplies power to the heating element through the first conduction loop, and the heating element generates heat based on the power supplied by the first power supply.

In response to the switch module 121 being placed in a second switch state, the second power supply 14, the detection element 123 and the heating element 122 are connected to form a second conduction loop, and the second power supply 14 supplies power to the heating element 122 and the detection element 123 through the second conduction loop.

In the embodiment of the application, the detection element 123 detects the impedance of the heating element 122 based on the power supplied by the second power supply 14, and the detected impedance controls the first power supply 13 to supply power to the heating element 122.

Here the heating element 122 includes, but is not limited to at least one of a coil, an electric hot wire, an electric hot plate, an electric hot rod, or an electric hot sheet.

Here the detection element 123 may include a resistor.

For example, the heating element is a coil in an electromagnetic oven. When the switch module is placed in the second switch state, the second conduction loop of the heating circuit is turned on, and the second power supply supplies power to the coil and the detection element. A current of the second conduction loop is detected by an ammeter, and the detected current is compared with a preset current, to determine whether a cooking device with a certain impedance is present on the coil of the electromagnetic oven, the predetermined current is a current detected when a cooking device is not present on the coil. Or, when the detection element is a resistor, a voltage across the resistor may be detected by a voltmeter, and the detected voltage is compared with a predetermined voltage, to determine whether a cooking device with a certain impedance is present on the coil of the electromagnetic oven, the predetermined voltage is a voltage detected when a cooking device is not present on the coil. When it is determined that a cooking device with a certain impedance is present on the coil, the switch module may be placed in the first switch state (the first conduction loop is turned on) to heat the induction oven with the first power supply.

Here the heating element may include one or more heating elements.

In an embodiment, the heating element includes multiple heating elements connected in series.

In another embodiment, the heating element includes multiple heating elements connected in parallel between the inverter circuit and the switch module. Here each of the heating elements may also be connected to a switch element, and the switch element is connected between the heating element and the switch module.

Here the switch module is a module having a switching function. Here when the switch module is placed in the first switch state, the first power supply, the inverter circuit and the heating element may be connected to form the first conduction loop; and when the switch module is placed in the second switch state, the second power supply, the detection element and the heating element may be connected to form the second conduction loop.

The inverter circuit may convert a direct current (DC) signal based on the first power supply into an alternating current (AC) signal, for example, convert an input DC signal into a high frequency electrical signal with a frequency higher than a preset value.

Therefore, the embodiment of the application may allow the heating circuit not to detect the detection element when it heats the heating element, or allow the heating circuit not to heat the heating element when it detects the detection element, so that the first conduction loop and the second conduction loop do not affect each other.

Therefore, it allows the heating circuit not to be affected by the second power supply when it heats the heating element, which greatly reduces a situation of excessive current on the heating element due to heating of the heating element by the second power supply; or allows the heating circuit not to be affected by the first power source when it detects the impedance of the heating element, thereby improving the accuracy of detecting presence of the impedance on the heating element.

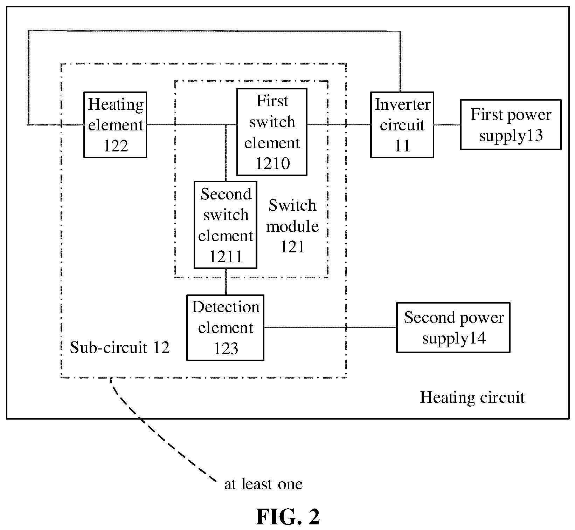

In some embodiments, as shown in FIG. 2, the switch module 121 may include a first switch element 1210 and a second switch element 1211.

The first switch element 1210 is connected to the heating element 122.

The second switch element 1211 is connected to the detection element 123.

In response to the first switch element 1210 being turned on and the second switch element 1211 being turned off, the switch module 121 is placed in the first switch state.

In response to the first switch element 1210 being turned off and the second switch element 1211 being turned on, the switch module 121 is placed in the second switch state.

Here each of the first switch element and the second switch element may be a single-pole single-throw switch or a single-pole single-throw relay.

In the embodiment of the application, when each of the first switch element and the second switch element is the single-pole single-throw relay, it is possible for the first switch element and the second switch element to be turned on or off automatically, thereby reducing danger caused by manpower to turn on or off the first switch element and the second switch element. When each of the first switch element and the second switch element is the single-pole single-throw switch, it may reduce the hardware cost of the entire heating circuit, and may reduce the weight of the entire heating circuit.

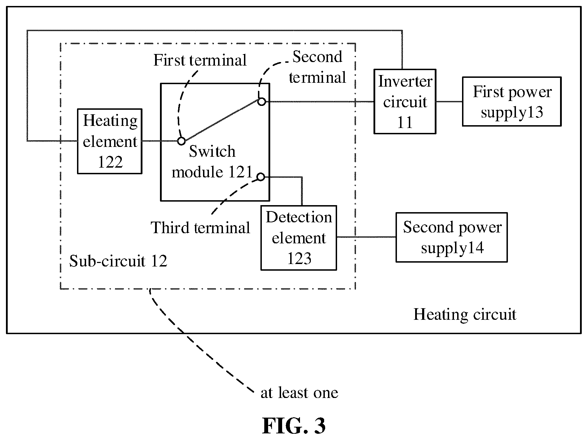

In some other embodiments, as shown in FIG. 3, the switch module 121 may include a first terminal, a second terminal and a third terminal.

The first terminal is connected to the heating element 122.

The second terminal is connected to the inverter circuit 11.

The third terminal is connected to the detection element 123.

In response to the first terminal being connected to the second terminal, the switch module 121 is placed in the first switch state.

In response to the first terminal being connected to the third terminal, the switch module 121 is placed in the second switch state.

Here the switch module may be a single-pole double-throw switch or a single-pole double-throw relay.

Here, as shown in FIG. 3, there is shown an example where the first terminal of the switch module 121 is connected to the second terminal thereof, so that the switch module of the heating circuit is placed in the first switch state. In other examples, the first terminal of the switch module may also be connected to the third terminal thereof.

In the embodiment of the application, when the switch module is the single-pole single-throw relay, it is possible for the switch module to be placed in the first switch state or the second switch state automatically, and thus it is possible for the first conduction loop or the second conduction loop to be turned on automatically, thereby reducing danger caused by manpower to adjust the switch module to be placed in the first switch state or the second switch state. When the switch module is the single-pole single-throw switch, it may reduce the hardware cost of the entire heating circuit, and may reduce the weight of the entire heating circuit.

Furthermore, in the embodiment of the application, one switch component is included in the switch module of one sub-circuit, and the switch module may be placed in the first switch state or the second switch state based on the one switch component. Therefore, comparing with two switch components included in the switch module of one sub-circuit, the number of switch components may be reduced, the structure of the heating circuit may be simplified, the hardware cost of the heating circuit may be reduced, and the weight of the heating circuit may be further reduced. When there are multiple sub-circuits, a more significant effect may be obtained, and the number of switch components and the hardware cost of the heating circuit may be greatly reduced.

It may be understood that the at least one sub-circuit 12 may include one or more sub-circuits.

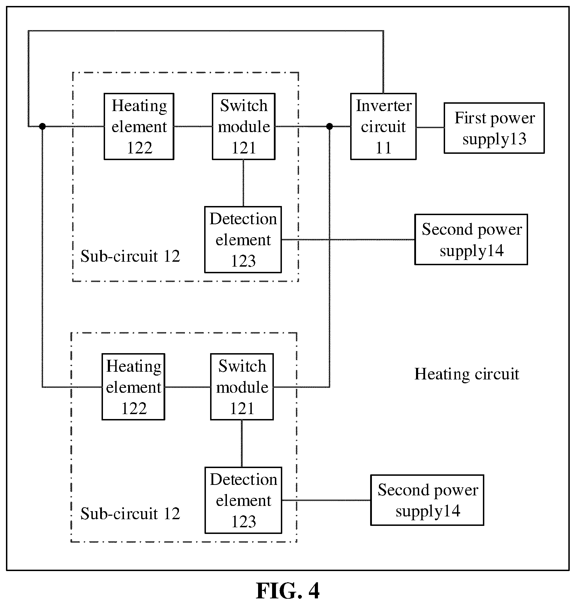

For example, as shown in FIG. 1, the heating circuit includes one sub-circuit. For another example, as shown in FIG. 4, the heating circuit includes two sub-circuits connected in parallel. When the sub-circuit includes three or more than three sub-circuits, the three or more than three sub-circuits may be connected in parallel, similarly to the connection of the sub-circuits in the heating circuit shown in FIG. 4.

Here when the heating circuit includes multiple sub-circuits, the multiple sub-circuits may be connected to respective second power supplies, respectively, or, the multiple sub-circuits may be connected to the same second power supply, or, part of the multiple sub-circuits are connected to a second power supply, and other sub-circuits are connected to another second power supply.

Here when the multiple sub-circuits are connected to different second power supplies, voltages supplied by the different second power supplies are the same, or a difference between voltages supplied by any two of the different second power supplies falls within a predetermined range.

In some embodiments, the sub-circuit may include N sub-circuits connected in parallel, and N is an integer greater than 1.

It may be understood that the number and type of components of the N sub-circuits are substantially the same. For example, the sub-circuit may include two sub-circuits, specifically, a sub-circuit 1 and a sub-circuit 2.

In an application scenario, the number and type of heating elements, detection elements and switch modules of the sub-circuit 1 and sub-circuit 2 are the same.

In another application scenario, the heating element of the sub-circuit 1 is a coil, the heating element of the sub-circuit 2 is an electric hot plate, and a difference between impedances of the coil and the electric hot plate falls within a predetermined threshold range.

In yet another application scenario, there are two detection elements in the sub-circuit 1, and two detection elements of the sub-circuit 1 are connected in series; there is one detection element in the sub-circuit 2, a difference between the sum of impedances of the two detection elements of the sub-circuit 1 and impedance of the one detection element of the sub-circuit 2 falls within a predetermined threshold range.

For example, the impedance of each of the two detection elements of the sub-circuit 1 is ten Ohms (Ω), and the impedance of the detection element of the sub-circuit 2 is between 19Ω and 20Ω.

For another example, the impedance of one of the two detection elements of the sub-circuit 1 is 50Ω and the impedance of the other of the two detection elements of the sub-circuit 1 is 20Ω, and the impedance of the detection element of the sub-circuit 2 is between 68Ω and 72Ω.

In yet another application scenario, the switch module of the sub-circuit 1 is a switch module including the first switch element and the second switch element, and the switch module of the sub-circuit 2 is a switch module including the first terminal, the second terminal and the third terminal.

In short, the multiple sub-circuits may have various structural forms, as long as each sub-circuit is provided with the heating element, the detection element and the switch module, as well as each sub-circuit heating the heating element and each sub-circuit detecting the impedance of the heating element do not affect each other, and the multiple sub-circuits are not limited here.

In the embodiment of the application, the N sub-circuits may collectively utilize one inverter circuit, and based on implementing, by one inverter circuit, multiple functions of detecting the impedance of the heating element and/or heating the heating element, the utilization of the inverter circuit may be improved.

Furthermore, the multiple sub-circuits may share one first power supply, and the utilization of the first power supply may be improved.

Furthermore, when the multiple sub-circuits share one second power supply or part of the sub-circuits share one second power supply, the utilization of the second power supply may be improved.

It should be noted that an Insulated Gate Bipolar Transistor (IGBT) is a composite full-control voltage-driven power semiconductor device composed of a Bipolar Junction transistor (BJT) and a Metal Oxide Semiconductor (MOS) transistor (or Insulated Gate Field Effect Transistor (IGFET)).

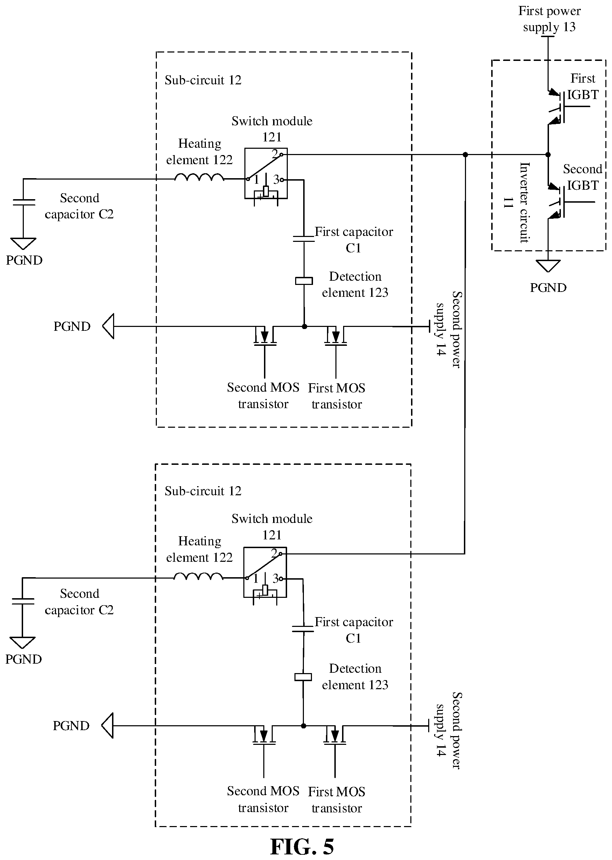

In some embodiments, as shown in FIG. 5, the inverter circuit 11 may include a first IGBT and a second IGBT.

A collector of the first IGBT is connected to the first power supply, and an emitter of the first IGBT is connected to the switch module 121 and a collector of the second IGBT, respectively.

An emitter of the second IGBT is grounded.

Here the heating circuit shown in FIG. 5 includes two sub-circuits.

Here the inverter circuit 11 may invert a DC voltage into an AC voltage, for example, invert the DC voltage of 220 V into a sine wave voltage or a square wave voltage of 220 V.

The inverter circuit 11 may also convert an AC voltage with a positive half wave into an AC voltage with a complete waveform (the AC voltage with the complete waveform is a voltage with a positive half wave and a negative half wave), for example, convert a square wave voltage of 220 V with a positive half wave into a square wave voltage of 220 V with a positive half wave and a negative half wave.

In the embodiment of the application, a frequency of an electrical signal output by the first power supply may be adjusted by frequencies of turning on and off the first IGBT and the second IGBT. A DC signal of the first power supply may be converted, by the inverter circuit composed of the first IGBT and the second IGBT, into an AC signal, or, further into a high frequency electrical signal with a frequency higher than a preset value.

Furthermore, the IGBT used in the inverter circuit has advantages of both a high input impedance of the MOS transistor and a low turn-on voltage drop of a power transistor. Therefore, the embodiment of the application may improve the stability and safe working voltage region of supplying power to the heating element, and further improve the safety of supplying power to the heating element.

It should be noted that the high frequency is defined relative to a low frequency mentioned in subsequent embodiments, and a frequency of the high frequency is greater than a frequency of the low frequency based on the same reference standard.

It may be understood that the inverter circuit may be composed of two Metal-Oxide-Semiconductor Field-Effect Transistor (MOSFET) transistors, or, the inverter circuit may be composed of two transistors.

For example, in some embodiments, the inverter circuit may further include a fifth MOS transistor and a sixth MOS transistor.

A drain of the fifth MOS transistor is connected to the first power supply 13, and a source of the fifth MOS transistor is connected to the switch module 121 and a drain of the sixth MOS transistor, respectively.

A source of the sixth MOS transistor is grounded.

Therefore, in the embodiment of the application, the heating element may be provided with a high frequency electrical signal by alternately turning on the fifth MOS transistor and the sixth MOS transistor.

In some embodiments, the first power supply may a power supply providing a first voltage, the second power supply may be a power supply providing a second voltage, and the first voltage is greater than the second voltage,
or,
in response to supplying, by the first power supply, the power to the heating element through the first conduction loop, a current flowing through the heating element is a first current,
in response to supplying, by the second power supply, the power to the heating element through the second conduction loop, a current flowing through the heating element is a second current, and
the first current is greater than the second current.

Here the first power supply acquires a power supply greater than or equal to 110 V, and the second power supply acquires a power supply smaller than or equal to 36 V.

In an embodiment, the first power supply acquires a DC voltage of 220 V, and the second power supply acquires a DC voltage of 5 V.

It may be understood that when the voltage acquired by the first power supply is greater than 110 V, the voltage acquired by the first power supply is a strong electricity voltage, and when the voltage acquired by the second power supply is smaller than 36 V, the voltage acquired by the second power supply is a weak electricity voltage. When both the first conduction loop and the second conduction loop are turned on under the power supplied by the first power supply and the second power supply, noise of the first conduction loop may generate crosstalk to the second conduction loop, so that presence of the impedance on the heating element is detected inaccurately. Furthermore, when the second conduction loop detects the impedance of the heating element, the actual voltage of the second conduction loop may be a strong electricity voltage greater than 110 V, which also poses a certain danger to a person in the vicinity of the heating circuit.

According to the embodiment of the application, the switch module is placed in different switch states, so that the second conduction loop may be turned off when the first conduction loop is turned on, or the first conduction loop may be turned off when the second conduction loop is turned on. Therefore, isolation of strong electricity from weak electricity is achieved, and danger due to low insulation performance of a weak electricity circuit is reduced.

Referring again to FIG. 5, in some embodiments, the sub-circuit 12 may include a first MOS transistor and a second MOS transistor.

A drain of the first MOS transistor is connected to the second power supply, and a source of the first MOS transistor is connected to a drain of the second MOS transistor and the detection element 123, respectively.

A source of the second MOS transistor is connected to a ground point.

Here when the first MOS transistor is an N-channel MOS transistor, the second MOS transistor is an N-channel MOS transistor, and when the first MOS transistor is a P-channel MOS transistor, the second MOS transistor is a P-channel MOS transistor.

In the embodiment of the application, when the second conduction loop is turned on, the second power supply supplies a low-voltage and high-frequency electrical signal to the heating element through the first MOS transistor and the second MOS transistor. Therefore, when the cooking device is not present on the heating element, a detection current flowing through the detection element is a first detection current value, and when the cooking device is present on the heating element, a detection current flowing through the detection element is a second detection current value. Therefore, a magnitude of the current of the detection element is detected by an ammeter, to determine whether a cooking device with a certain impedance is present on the heating element. Furthermore, the impedance value of the cooking device may be calculated by a predetermined first detection current value, a second detection current value, or the like.

Or, it may determine whether a cooking device with a certain impedance is present on the heating element, by detecting the magnitude of the voltage on the detection element. Furthermore, the impedance value of the cooking device may be calculated based on a first detection voltage value and a second detection voltage value on the detection element. The first detection voltage value is a voltage value on the detection element when the cooking device is not present on the heating element, and the second voltage value is a voltage value on the detection element when the cooking device is present on the heating element.

Referring again to FIG. 5, in some embodiments, the sub-circuit 12 may further include a first capacitor C1.

The first capacitor C1 is connected between the switch module 121 and the detection element 123 and configured to control an alternating frequency of a detection current of the heating element 122.

Here one sub-circuit 12 includes one detection element. In an embodiment, the detection element is a resistor. Therefore, the number of detection elements of the heating circuit may be reduced.

In the embodiment of the application, an oscillation frequency (i.e., an alternating frequency) of the heating element in the second conduction loop may be adjusted by adjusting a capacitive resistance of the first capacitor C1, the impedance of the heating element and the impedance of the detection element.

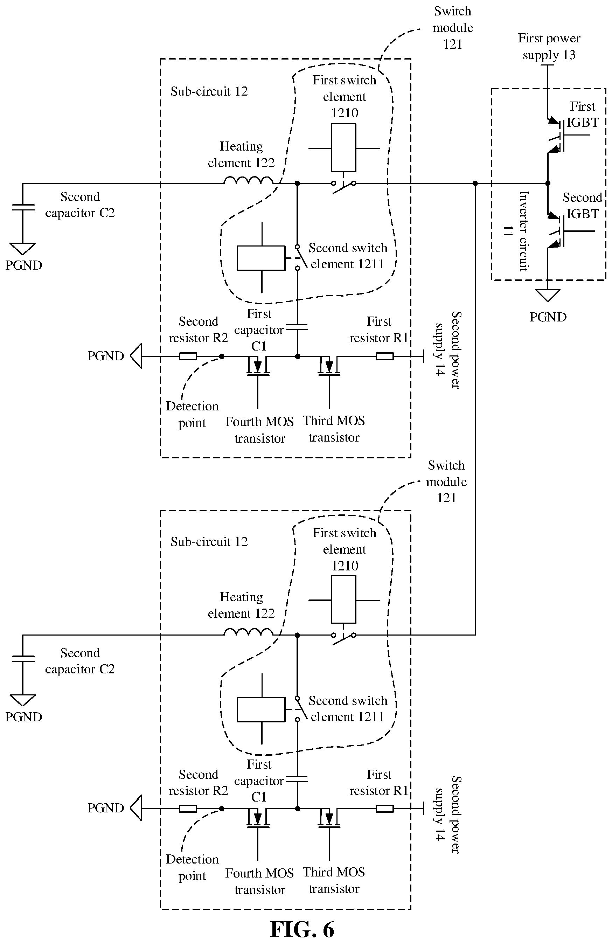

In some embodiments, as shown in FIG. 6, the detection element 123 may include a first resistor R1 and a second resistor R2, and the sub-circuit 12 may include a third MOS transistor and a fourth MOS transistor.

The first resistor R1 is connected between a drain of the third MOS transistor and the second power supply 14.

The second resistor R2 is connected between a source of the fourth MOS transistor and a ground point PGND.

A source of the third MOS transistor is connected to a drain of the fourth MOS transistor and the switch module 121, respectively.

The second resistor R2 detects, based on the power supplied by the second power supply 14, resistance of the heating element 122.

Here the detection element of one sub-circuit includes the first resistor and the second resistor.

Here, as shown in FIG. 6, the switch module is a switch module including the first switch element 1210 and the second switch element 1211, and the source of the third MOS transistor is connected to the switch module 121 so that the source of the third MOS transistor is connected to the second switch element 1211.

In the embodiment of the application, two resistors are provided in the detection element of one sub-circuit, and the two resistors are connected between the third MOS transistor and the second power supply and between the fourth MOS transistor and the ground, respectively, so that the impedance of the second conduction loop may be the same when the second conduction loop is charged and discharged. Therefore, power supply of the second conduction loop is more stable and loss of components in the second conduction loop is reduced.

Furthermore, whether a cooking device with a certain impedance is present on the heating resistor is detected based on a voltage of the second resistor R2, since a low voltage terminal of the second resistor R2 is grounded and has a voltage of 0, only a high voltage terminal of the second resistor R2 (for example, a detection point shown in FIG. 6) may be acquired, then the voltage of the second resistor R2 may be acquired, which makes it easier to detect the voltage of the detection element. Furthermore, the accuracy of detecting the impedance of the heating element may be further improved.

Referring again to FIG. 6, in some embodiments, the heating circuit may further include a second capacitor C2.

The second capacitor C2 is connected between the heating element 122 and a ground point PGND.

In response to the switch module 121 being placed in the first switch state, the second capacitor C2 is configured to control an alternating frequency of a heating current of the heating element 122.

In response to the switch module 121 being placed in the second switch state, the second capacitor C2 is configured to control an alternating frequency of a detection current of the heating element 122.

In the embodiment of the application, when the switch module is placed in the first switch state, the alternating frequency of the heating current of the heating element may be adjusted by adjusting a capacitive resistance of the second capacitor and the impedance of the heating element.

In an application scenario of the embodiment of the application, when the second capacitor C2 is present in the heating circuit, the first capacitor may not be required in the heating circuit. Therefore, the second capacitor C2 may control the alternating frequency of the detection current of the heating element when the switch module is placed in the second switch state.

Here the oscillation frequency (i.e., the alternating frequency) of the heating element in the second conduction loop may be adjusted by adjusting the capacitive resistance of the second capacitor C2, impedances of the first resistor and the second resistor and the impedance of the heating element.

In another application scenario in the embodiment of the application, both the second capacitor C2 and the first capacitor C1 are present in the heating circuit. Therefore, when the switch module is placed in the first switch state, the second capacitor C2 and the first capacitor C1 cooperate together to control the alternating frequency of the detection current of the heating element.

Here the oscillation frequency (i.e., the alternating frequency) of the heating element in the second conduction loop may be adjusted by adjusting capacitive resistances of the second capacitor C2 and the first capacitor C1, impedances of the first resistor and the second resistor and the impedance of the heating element.

In the embodiment of the application, the alternating frequency of the heating current of the heating element in the first conduction loop or the detection current of the heating element in the second conduction loop may be adjusted by one capacitor, and the utilization of the second capacitor may be improved. Comparing with adjusting the alternating frequency of the heating current of the heating element in the first conduction loop or the detection current of the heating element in the second conduction loop by two capacitors, respectively, the number of components of the heating circuit may be reduced, thereby reducing the hardware cost of the heating circuit.

### First example

Referring again to FIG. 5, an embodiment of the application provides a heating circuit, including an inverter circuit 11, two sub-circuits 12, a first power supply 13, a second power supply 14 and a second capacitor C2.

The sub-circuit 12 includes a switch module 121, a heating element 122, a detection element 123, a first capacitor C1, a first MOS transistor and a second MOS transistor.

The inverter circuit 11 includes a first IGBT and a second IGBT. A collector of the first IGBT is connected to the first power supply 13, an emitter of the first IGBT is connected to a collector of the second IGBT, and an emitter of the second IGBT is grounded by PGND.

The switch module 121 includes a first terminal, a second terminal and a third terminal. The first terminal is connected to the heating element 122, the second terminal is connected to the emitter of the first IGBT, and the third terminal is connected to the first capacitor C1.

The first capacitor C1 is connected to the detection element 123.

A drain of the first MOS transistor is connected to the second power supply 14, and a source of the first MOS transistor is connected to a drain of the second MOS transistor and the detection element 123, respectively. A source of the second MOS transistor is connected to a ground point PGND.

The second capacitor C2 is connected between the heating element 122 and the ground point PGND.

When the first terminal of the switch module 121 is connected to the second terminal thereof, the switch module 121 is placed in a first switch state, then the first power supply 13, the inverter circuit 11 and the heating element 122 are connected to form a first conduction loop, the first power supply 13 supplies power to the heating element 122 through the first conduction loop, and the heating element 122 generates heat based on the power supplied by the first power supply 13.

When the first terminal of the switch module 121 is connected to the third terminal thereof, the switch module 121 is placed in a second switch state, the second power supply 14, the detection element 123 and the heating element 122 are connected to form a second conduction loop, and the second power supply 14 supplies power to the heating element 122 and the detection element 123 through the second conduction loop.

Here the detection element 123 detects impedance of the heating element 122 based on the power supplied by the second power supply 14, and the detected impedance controls the first power supply 13 to supply the power to the heating element 122.

In the embodiment of the application, the switch module may be placed in different states to switch the first conduction loop and the second conduction loop to be turned on, so that the first conduction loop and the second conduction loop are isolated mutually. Therefore, the heating circuit may not to be affected by the second power supply when it heats the heating element, which greatly reduces a situation of excessive current on the heating element due to heating of the heating element by the second power supply; or the heating circuit may not to be affected by the first power source when it detects the impedance of the heating element, thereby improving the accuracy of detecting presence of the impedance on the heating element.

Furthermore, the switch module is a switch module including three terminals, it may turn on the first conduction loop when the first terminal and the second terminal are connected, or, it may turn on the second conduction loop when the first terminal and the third terminal are connected, so that the first conduction loop and the second conduction loop may be switched to be turned on. Comparing with switching the first conduction loop and the second conduction loop by the switch module including two switch elements, the number of components of the heating circuit may be greatly reduced, and thus the hardware cost of the heating circuit may be greatly reduced.

### Second example

Referring again to FIG. 6, an embodiment of the application provides a heating circuit, including an inverter circuit 11, two sub-circuits 12, a first power supply 13, a second power supply 14 and a second capacitor C2.

The sub-circuit 12 includes a switch module 121, a heating element 122, a first resistor R1, a second resistor R2, a first capacitor C1, a third MOS transistor and a fourth MOS transistor.

The inverter circuit 11 includes a first IGBT and a second IGBT. A collector of the first IGBT is connected to the first power supply 13, an emitter of the first IGBT is connected to a collector of the second IGBT, and an emitter of the second IGBT is grounded by PGND.

The switch module 121 includes a first switch element 1210 and a second switch element 1211. The first switch element 1210 is connected between the heating element 122 and the emitter of the first IGBT, and the second switch element 1211 is connected between the heating element 122 and the first capacitor C1.

The first capacitor C1 is also connected to a source of the third MOS transistor.

The first resistor R1 is connected between a drain of the third MOS transistor and the second power supply 14, the second resistor R2 is connected between a source of the fourth MOS transistor and a ground point PGND, and the source of the third MOS transistor is also connected to a drain of the fourth MOS transistor. The second resistor detects resistance of the heating element based on the power supplied by the second power supply 14.

The second capacitor C2 is connected between the heating element 122 and the ground point PGND.

When the first switch element 1210 is turned on and the second switch element 1211 is turned off, the switch module 121 is placed in a first switch state, the first power supply 13, the inverter circuit 11 and the heating element 122 are connected to form a first conduction loop, the first power supply 13 supplies power to the heating element 122 through the first conduction loop, and the heating element 122 generates heat based on the power supplied by the first power supply 13.

When the first switch element 1210 is turned off and the second switch element 1211 is turned on, the switch module 121 is placed in the second switch state, the second power supply 14, the first resistor R1, the second resistor R2 and the heating element 122 are connected to form a second conduction loop, and the second power supply 14 supplies power to the heating element 122, the first resistor R1 and the second resistor R2 through the second conduction loop.

In the embodiment of the application, the first resistor R1 and the second resistor R2 are equivalent to the detection element 123 in the above embodiment.

In an embodiment, the second resistor R2 is equivalent to the detection element 123 in the above embodiment.

Here the detection element 123 detects impedance of the heating element 122 based on the power supplied by the second power supply 14, and the detected impedance controls the first power supply 13 to supply the power to the heating element 122.

In the embodiment of the application, the switch module may be placed in different states to switch the first conduction loop and the second conduction loop to be turned on, so that the first conduction loop and the second conduction loop are isolated mutually. Therefore, the heating circuit may not to be affected by the second power supply when it heats the heating element, which greatly reduces a situation of excessive current on the heating element due to heating of the heating element by the second power supply; or the heating circuit may not to be affected by the first power source when it detects the impedance of the heating element, thereby improving the accuracy of detecting presence of the impedance on the heating element.

Furthermore, the detection element includes the first resistor R1 and the second resistor R2, and a connection manner of the first resistor R1 and the resistor R2 in the heating circuit may formed so that the impedance of the second conduction loop may be the same when the second conduction loop is charged and discharged. Therefore, power supply of the second conduction loop is more stable and loss of components in the second conduction loop is reduced.

Furthermore, a low voltage terminal of the second resistor R2 is grounded in this connection manner. Therefore, whether a cooking device with a certain impedance is present on the heating element is determined by detecting the voltage of the second resistor R2, an operation of acquiring the detection voltage may also be simplified.

Furthermore, the second capacitor may adjust an alternating frequency of a heating current of the heating element when the first conduction loop is turned on, or may adjust an alternating frequency of a detection current of the heating element when the second conduction loop is turned on, thereby improving the utilization of the second capacitor. Furthermore, it may replace the first capacitor of the heating circuit, so that the first capacitor is not required to be provided in the heating circuit, thereby further reducing the number of components of the heating circuit and the hardware cost of the heating circuit.

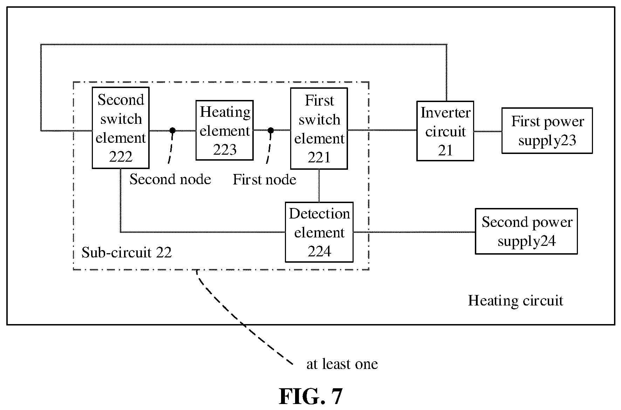

As shown in FIG. 7, an example of the application provides a heating circuit, including an inverter circuit 21, at least one sub-circuit 22, a first power supply 23 and a second power supply 24. The sub-circuit 22 includes a first switch element 221, a second switch element 222, a heating element 223 and a detection element 224.

The heating element 223 and the detection element 224 are connected in parallel between a first node connected to the first power supply 23 and a second node connected to a ground point, the first switch element 221 is connected between the first node and the first power supply 23, and the second switch element 222 is connected between the second node and the ground point.

In response to both the first switch element 221 and the second switch element 222 being turned on, the first power supply 23, the inverter circuit 21 and the heating element 223 are connected to form a first conduction loop, the first power supply supplies power to the heating element through the first conduction loop, and the heating element generates heat based on the power supplied by the first power supply.

In response to both the first switch element 221 and the second switch element 222 being turned off, the second power supply 23, the detection element 224 and the heating element 223 are connected to form a second conduction loop, and the second power supply 24 supplies power to the heating element 223 and the detection element 224 through the second conduction loop.

In the example of the application, a second terminal of the inverter circuit is connected to a ground point (GND) (not shown in FIG. 7).

The inverter circuit converts a DC signal based on the first power supply into an AC signal, for example, into a high frequency electric signal with a frequency higher than a preset value.

In the example of the application, the detection element 224 detects impedance of the heating element 223 based on the power supplied by the second power supply 24, and the detected impedance controls the first power supply 23 to supply the power to the heating element 223.

In FIG. 7, only one sub-circuit is described. It may be understood that multiple sub-circuits may be used in the example of the application. The multiple sub-circuits are connected in parallel across the inverter circuit.

In some examples, the sub-circuit may include N sub-circuits connected in parallel, and N is an integer greater than 1.

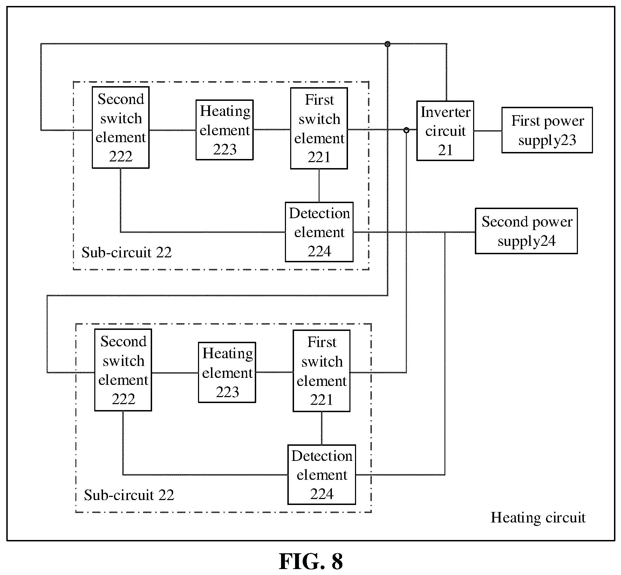

As shown in FIG. 8, there is shown that the heating circuit includes two sub-circuits connected in parallel. In other examples, three or more than three sub-circuits may be connected in parallel, in a manner similar to connection of the sub-circuits shown in FIG. 8.

Here when the N sub-circuits are connected in parallel, the N sub-circuits share one second power supply 24. In other examples, the N sub-circuits may be connected to respective second power supplies, respectively, or, a part of the N sub-circuits share one second power supply, and another part of sub-circuits share another second power supply.

Here the heating element 223 may be a coil, an electric hot wire, an electric hot plate, an electric hot rod, an electric hot plate, or the like.

For example, the heating element is a coil in an electromagnetic oven. When both the first switch element and the second switch element are turned on, the second conduction loop of the heating circuit is turned on, and the second power supply supplies power to the coil and the detection element. A voltage across the detection element is detected by a voltmeter, and the detected voltage is compared with a preset voltage, to determine whether a cooking device with a certain impedance is present on the coil of the electromagnetic oven, the predetermined voltage is a voltage across the detection element detected when a cooking device is not present on the coil. When it is determined that a cooking device with a certain impedance is present on the coil, both the first switch element and the second switch element are turned on, to heat the induction oven with the first power supply.

Here the heating element 223 may include one or more heating elements.

In an example, the first switch element is a single-pole single-throw switch and the second switch element is a single-pole single-throw switch.

In another example, the first switch element is a single-pole double-throw switch and the second switch element is a single-pole single-throw switch.

In yet another example, the first switch element is a single-pole single-throw relay and the second switch element is a single-pole single-throw relay.

In yet another example, the first switch element is a single-pole double-throw relay and the second switch element is a single-pole single-throw relay.

In the example of the application, when the relay is used as the first switch element or the second switch element to turn on or off the first conduction loop or the second conduction loop, danger caused by manpower to select the first conduction loop or the second conduction loop to be turned on or off may be greatly reduced.

Furthermore, when the first switch element is a single-pole double-throw relay or a single-pole double-throw switch, the first switch element further includes three terminals connected to the heating element, the detection element and the inverter circuit, respectively. Therefore, the connection between the heating element and the inverter circuit or the connection between the heating element and the detection element may be achieved by the first switch element.

In the example of the application, the first conduction loop formed by connecting the first power supply, the inverter circuit and the heating element, or the second conduction loop formed by connecting the second power supply, the detection element and the heating element, may be turned on or off by turning on or off the first switch element and the second switch element. Therefore, the first conduction loop and the second conduction loop do not have electrical connection points there-between, and thus the first conduction loop and the second conduction loop are isolated mutually and do not affect each other.

Therefore, the second power supply is not affected by the first power supply when it detects the heating element through the second conduction loop, which improves the accuracy of detecting presence or absence of the impedance on the heating element. Furthermore, the first power supply is not affected by the second power supply when it heats the heating element through the first conduction loop, which greatly reduces effect of excessive current on the heating element due to heating of the heating element by the second power supply.

Furthermore, when there are multiple sub-circuits, and the multiple sub-circuits share one inverter circuit, the first conduction loop and the second conduction loop of each of the multiple sub-circuits do not affect each other. That is, heating of the heating element by a part of the multiple sub-circuits and detection of the detection element by another part of the sub-circuits may be achieved without being affected by each other. For example, when a first sub-circuit heats the heating element of the first sub-circuit based on the first power supply, and a second sub-circuit detects the detection element of the second sub-circuit based on the second power supply, then the heating element of the first sub-circuit is not affected by the second power supply of the first sub-circuit and not affected by the second power supply of the second sub-circuit, furthermore, the detection element of the second sub-circuit is not affected by the first power supply. Therefore, the heating element of the first sub-circuit and the detection element of the second sub-circuit may function simultaneously without being affected by each other.

Furthermore, when there are multiple sub-circuits, and the multiple sub-circuits share one inverter circuit, the utilization of the sub-circuits may be improved. Furthermore, in the example of the application, when the multiple sub-circuits are connected to one second power supply, or part of the sub-circuits are connected to one second power supply, then one second power supply may be shared by the multiple sub-circuits or part of the multiple sub-circuits, and the utilization of the second power supply is improved.

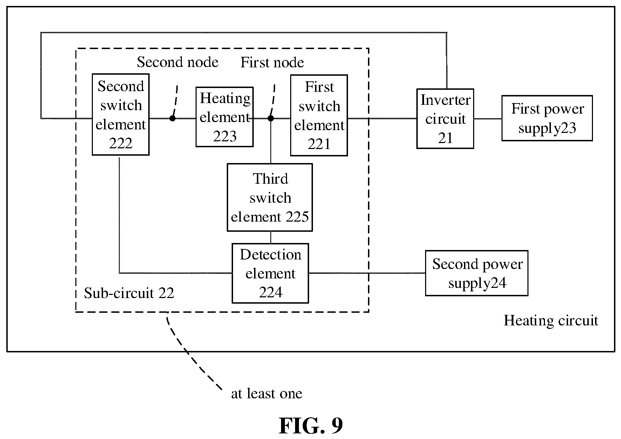

As shown in FIG. 9, in some examples, the sub-circuit 22 may further include a third switch element 225 connected between the first node and the detection element.

In response to both the first switch element 221 and the second switch element 222 being turned on and the third switch element 225 being turned off, the first power supply 23, the inverter circuit 21 and the heating element 223 are connected to form the first conduction loop.

In response to both the first switch element 221 and the second switch element being turned off and the third switch element being turned on, the second power supply, the detection element and the heating element are connected to form the second conduction loop.

In the example of the application, both the first switch element and the third switch element are single-pole single-throw switches, single-pole single-throw relays, or the like.

In the example of the application, when the switch element (e.g., the first switch element, the second switch element, or the third switch element) is the single-pole single-throw switch, the hardware cost of the entire heating circuit may be reduced, and the weight of the entire heating circuit may be reduced. When the switch element is the single-pole single-throw relay, danger caused by manpower to turn on or off the switch element may be reduced.

In the example of the application, the first conduction loop may be turned on by turning on the first switch element and the second switch element and turning off the third switch element. Furthermore, when the heating element is heated by the first power supply, it is not affected by the second power supply, and thus a probability of occurrence of excessive current on the heating element is reduced.

Furthermore, in the example of the application, the second conduction loop may be turned on by turning off the first switch element and the second switch element and turning on the third switch element. Furthermore, when impedance of the heating element is detected by the second power supply, it is not affected by the first power supply, and thus the accuracy of detecting the impedance of the heating element is improved.

Therefore, isolation of the first conduction loop from the second conduction loop may be achieved.

Furthermore, in the example of the application, when the heating circuit includes multiple sub-circuits, and the multiple sub-circuits operate at the same time, neither the first conduction loop nor the second conduction loop of each sub-circuit is affected by each other, thereby improving the accuracy of detecting presence of the impedance on the heating element by each sub-circuit and the stability of heating the heating element circuit.

In some examples, the first switch element 221 may include a first terminal, a second terminal and a third terminal.

A first terminal is connected to the heating element 223.

A second terminal is connected to the inverter circuit 21.

A third terminal is connected to the detection element 224.

In response to the first terminal being connected to the second terminal and the second switch element 222 being turned on, the first power supply 23, the inverter circuit 21 and the heating element 223 are connected to form the first conduction loop.

In response to the first terminal being connected to the third terminal and the second switch element 222 being turned off, the second power supply 24, the detection element 224 and the heating element 223 are connected to form the second conduction loop.

In the example of the application, the first conduction loop may be turned on based on the first terminal connecting to the second terminal of the first switch element and turning on the second switch element, and the second conduction loop may be turned on based on connecting the first terminal to the third terminal of the first switch element and turning on the second switch element. Therefore, in the example of the application, one sub-circuit may include only one first switch element and one second switch element, and it is not necessary to add a third switch element to completely separate the first conduction loop from the second conduction loop, so that the number of components of the heating circuit may be reduced to some extent, and the hardware cost of the heating circuit may be reduced.

It may be understood that in an actual application, when the first terminal is connected to the third terminal and the second switch element is turned on, the second power supply, the detection element and the heating element may also be connected to form the second conduction loop. However, at this time, whether a cooking device with a certain impedance is present on the heating element is detected by the second power supply, it may still be affected by the first power supply to some extent, and thus it is not accurate to detect the impedance of the heating element.

In the example of the application, the second conduction loop may be turned on by connecting the first terminal to the third terminal and turning off the second switch element. Furthermore, when the impedance of the heating element is detected by the second power supply, it is affected by the first power supply, and thus the accuracy of detecting the impedance of the heating element is improved.

Furthermore, in the example of the application, the first conduction loop may be turned on by connecting the first terminal to the second terminal and turning on the second switch element. Furthermore, when the heating element is heated by the first power supply, it is not affected by the second power supply, and thus a probability of occurrence of excessive current on the heating element is reduced.

Therefore, isolation of the first conduction loop from the second conduction loop quarantine may be achieved.

Furthermore, in the example of the application, when the heating circuit includes multiple sub-circuits, and the multiple sub-circuits operate at the same time, neither the first conduction loop nor the second conduction loop of each sub-circuit is affected by each other, thereby improving the accuracy of detecting presence of the impedance on the heating element by each sub-circuit and the stability of heating the heating element circuit.

In some examples, the first power supply may be a power supply providing a first voltage, the second power supply may be a power supply providing a second voltage, and the first voltage is greater than the second voltage,
or,
in response to supplying, by the first power supply, the power to the heating element through the first conduction loop, a current flowing through the heating element is a first current,
in response to supplying, by the second power supply, the power to the heating element through the second conduction loop, a current flowing through the heating element is a second current, and
the first current is greater than the second current.

Here the first power supply acquires a power supply greater than or equal to 110 V, and the second power supply acquires a power supply smaller than or equal to 36 V.

In an example, the first power supply acquires a DC voltage of 220 V, and the second power supply acquires a DC voltage of 3.5 V.

It may be understood that when the voltage acquired by the first power supply is greater than 110 V, the voltage acquired by the first power supply is a strong electricity voltage, and when the voltage acquired by the second power supply is smaller than 36 V, the voltage acquired by the second power supply is a weak electricity voltage. When both the first conduction loop and the second conduction loop are turned on under the power supplied by the first power supply and the second power supply, noise of the first conduction loop may generate crosstalk to the second conduction loop, so that presence of the impedance on the heating element is detected inaccurately. Furthermore, when the second conduction loop detects the impedance of the heating element, the actual voltage of the second conduction loop may be a strong electricity voltage greater than 110 V, which also poses a certain danger to a person in the vicinity of the heating circuit.

According to the example of the application, the first switch element and the second switch element may be turned on or off, so that the second conduction loop may be turned off when the first conduction loop is turned on, or the first conduction loop may be turned off when the second conduction loop is turned on. Therefore, isolation of strong electricity from weak electricity is achieved, and danger due to low insulation performance of a weak electricity circuit is reduced.

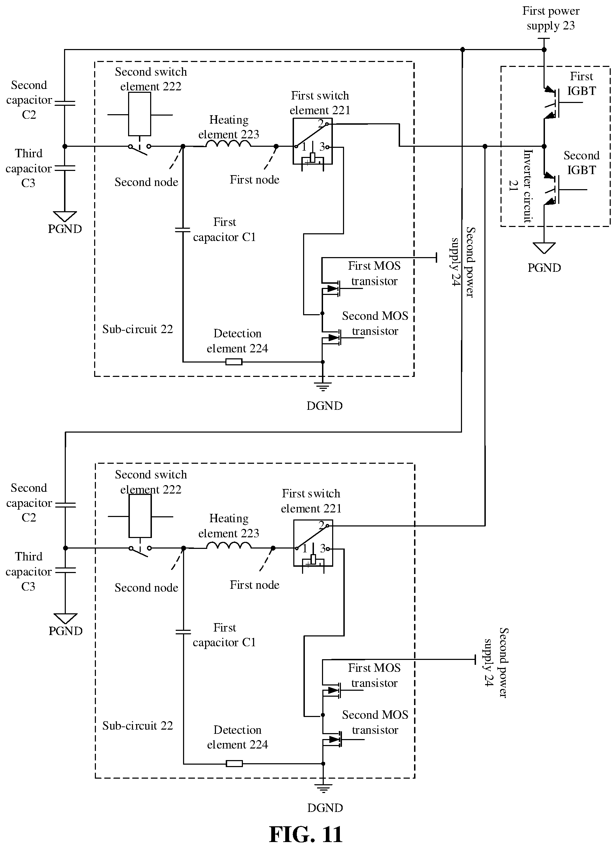

As shown in FIG. 11, in some examples, the sub-circuit 22 may further include a first MOS transistor and a second MOS transistor.

A drain of the first MOS transistor is connected to the second power supply 24, and a source of the first MOS transistor is connected to a drain of the second MOS transistor and the first switch element 221, respectively.

A source of the second MOS transistor is connected to a ground point DGND and the detection element 224, respectively.

Here, as shown in FIG. 11, both the ground point DGND and the ground point PGND are ground points, and usually have a voltage of zero.

Here the heating circuit shown in FIG. 11 includes two sub-circuits.

Here the MOS transistor is a MOSFET transistor.

Here when the first MOS transistor is an N-channel MOS transistor, the second MOS transistor is an N-channel MOS transistor, and when the first MOS transistor is a P-channel MOS transistor, the second MOS transistor is a P-channel MOS transistor.

In an example, each of the first MOS transistor and the second MOS transistor may also be replaced by two transistors.

Here the first switch element is a switch element including the first terminal, the second terminal, and the third terminal, the source of the first MOS transistor is connected to the first switch element such that the source of the first MOS transistor is connected to the third terminal of the first switch element.

In another example, for example, as shown in IFG. 12, when the sub-circuit further includes a third switch element 225, the source of the first MOS transistor is connected to the drain of the second MOS transistor and the third switch element, respectively.

In the example of the application, when the second conduction loop is turned on, the second power supply supplies a low-voltage and high-frequency electrical signal to the heating element through the first MOS transistor and the second MOS transistor. Therefore, whether a cooking device with a certain impedance is present on the heating element may be determined by the detection voltage or the detection current flowing through the detection element. Furthermore, when a detection current detected when a cooking device with a certain impedance is not present on the heating element is a first detection current value and the detected detection current is a second detection current value, the impedance value of the cooking device may be calculated based on the first detection current value and the second detection current value. Or, when a detection voltage detected when a cooking device with a certain impedance is not present on the heating element is a first detection voltage value and the detected detection voltage is a second detection voltage value, the impedance value of the cooking device may be calculated based on the first detection voltage value and the second detection voltage value.

In the example of the application, a fourth switch element may be provided between the first MOS transistor and the second MOS transistor, and may be configured to disconnect the first MOS transistor from the second MOS transistor.

Here the fourth switch element may be a single-pole single-throw switch turned on or off based on a user's operation. Or, the fourth switch element is a controlled switch connected to a control circuit which controls the controlled switch to be turned on or off.

Here the fourth switch element may replace the third switch element. Therefore, when the first switch element and the second switch element are turned on and the fourth switch element is turned off, the first conduction loop is turned on, and when the first switch element and the second switch element are turned off and the fourth switch element is turned on, the second conduction loop is turned on.

Referring again to FIG. 11, in some examples, the sub-circuit 22 may further include a first capacitor C1.

The first capacitor C1 is connected between the second node and the detection element 224 and configured to control an alternating frequency of a detection current of the heating element.

Here the first capacitor C1 is a matching capacitor of the heating element. Here an oscillation frequency (i.e., an alternating frequency) of the detection current of the heating element in the second conduction loop may be adjusted by adjusting a capacitive resistance of the first capacitor C1, the impedance of the heating element and the impedance of the detection element.

In the example of the application, the oscillation frequency of the detection current in the second conduction loop may be adjusted by adjusting the capacitive resistance of the first capacitor C1, the impedance of the heating element and the impedance of the detection element, so that the accuracy of detecting presence or absence of the impedance on the heating element may be improved.

Furthermore, when the capacitive resistance of the first capacitor C1 is the same as the impedance value of the heating element, the impedance of the first capacitor C1 and the heating element in the second conduction loop is equivalent to zero (corresponding to a series oscillation composed of C1 and L1). Therefore, the second power supply may only provide function to the detection resistor, and the impedance of a cooking device with a certain impedance present on the heating element (if any), the accuracy of detecting presence or absence of the impedance on the heating element may be further improved.

Referring again to FIG. 11, in some examples, the inverter circuit 21 may include a first IGBT and a second IGBT.

A collector of the first IGBT is connected to the first power supply 23, an emitter of the first IGBT is connected to a collector of the second IGBT, and an emitter of the second IGBT is grounded.

The first switch element 221 is connected to the emitter of the first IGBT, and the second switch element is connected to the collector of the first IGBT.

Here the inverter circuit 21 may invert a DC voltage into an AC voltage, for example, invert the DC voltage of 110 V into a sine wave voltage or a square wave voltage of 110 V.

The inverter circuit 21 may also convert an AC voltage with a positive half wave into an AC voltage with a complete waveform (the AC voltage with the complete waveform is a voltage with a positive half wave and a negative half wave), for example, convert a square wave voltage of 220 V with a positive half wave into a square wave voltage of 220 V with a positive half wave and a negative half wave.

In the example of the application, a frequency of an electrical signal output by the first power supply may be adjusted by frequencies of turning on and off the first IGBT and the second IGBT. A DC signal of the first power supply may be converted, by the inverter circuit composed of the first IGBT and the second IGBT, into an AC signal, or, further into a high frequency electrical signal with a frequency higher than a preset value.

Furthermore, the IGBT used in the inverter circuit has advantages of both a high input impedance of the MOS transistor and a low turn-on voltage drop of a power transistor. Therefore, the example of the application may improve the stability and safe working voltage region of supplying power to the heating element, and further improve the safety of supplying power to the heating element.

It should be noted that the high frequency is defined relative to a low frequency mentioned in subsequent examples, and a frequency of the high frequency is greater than a frequency of the low frequency based on the same reference standard.

It may be understood that the inverter circuit may be composed of two MOS transistors, or, the inverter circuit may be composed of two transistors.

For example, in some examples, the inverter circuit may further include a third MOS transistor and a fourth MOS transistor.

A drain of the third MOS transistor is connected to the first power supply 23, a source of the third MOS transistor is connected to a drain of the fourth MOS transistor, and a source of the fourth MOS transistor is grounded.

The first switch element is connected to the source of the third MOS transistor, and the second switch element is connected to the drain of the third MOS transistor.

Therefore, in the example of the application, the heating element may be provided with a high frequency electrical signal by alternately turning on the third MOS transistor and the fourth MOS transistor.

Referring again to FIG. 11, in some examples, the heating circuit may further include a second capacitor C2 and a third capacitor C3.

The second capacitor C2 is connected between the first power supply 23 and the second switch element 222.

The third capacitor C3 is connected between the second capacitor C2 and a ground point PGND.

The second capacitor C2 and the third capacitor C3 cooperate to control an alternating frequency of a heating current of the heating element.

Here the second capacitor C2 and the third capacitor C3 are matching capacitors of the heating element. Here an oscillation frequency (i.e., an alternating frequency) of the heating current of the heating element in the first conduction loop may be adjusted by adjusting capacitive resistances of the second capacitor C2 and the third capacitor C3, and the impedance of the heating element.

In the example of the application, the alternating frequency of the heating current in the first conduction loop may be adjusted by adjusting capacitive resistances of the second capacitor C2 and the third capacitor C3, and the impedance of the heating element. When the capacitive resistances of the second capacitor and the third capacitor are adjusted to be equivalent to the impedance of the heating element, electric field energies of the second capacitor and the third capacitor may be converted into magnetic field energy of the heating element, vice versa, and thus energy consumption of the first power supply providing function to the first conduction loop may be saved.

### Third example

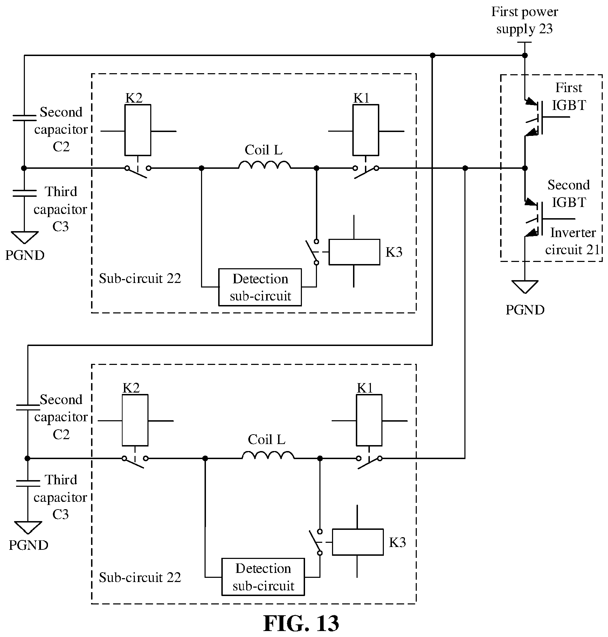

As shown in FIG. 13, an example of the application further provides a heating circuit, including an inverter circuit 21, a sub-circuit 22, a first power supply 23, a second capacitor C2 and a third capacitor C3.

The sub-circuit 22 includes a detection sub-circuit, a coil L, a first switch element K1, a second switch element K2 and a third switch element K3.

The inverter circuit includes a first IGBT and a second IGBT, a collector of the first IGBT is connected to the first power supply 23, an emitter of the first IGBT is connected to a collector of the second IGBT, and an emitter of the second IGBT is grounded by PGND.

The first switch element K1 is connected between the coil L and the emitter of the first IGBT, the second switch element K2 is connected to the coil L, and the third switch element K3 is connected to the detection sub-circuit connected in parallel with the coil L.

The second capacitor C2 is connected between the first power supply 23 and the second switch element K2, and the third capacitor C3 is connected between the second capacitor C2 and a ground point PGND.

In response to both the first switch element K1 and the second switch element K2 being turned on, and the third switch element K3 being turned off, the first power supply 23, the inverter circuit 21 and the coil L are connected to form a first conduction loop, the first power supply 23 supplies power to the coil L through the first conduction loop, and the coil L generates heat based on the power supplied by the first power supply 23.

In response to both the first switch element K1 and the second switch element K2 being turned off, and the third switch element K3 being turned on, the detection sub-circuit and the coil L are connected to form a second conduction loop, and the detection sub-circuit supplies power to the coil L through the second conduction loop.

Here the detection sub-circuit detects impedance of the coil L, and the detected impedance controls the first power supply 23 to supply the power to the coil L.

Here the detection sub-circuit may include the second power supply, the first capacitor and the detection element in the above example. The second power supply supplies power to the second conduction loop, the detection element detects the impedance of the coil L based on the power supplied by the second power supply, and the first capacitor controls an alternating frequency of the detection current of the coil L in the second conduction loop.

Of course, the detection sub-circuit may also include the first MOS transistor and the second MOS transistor in the above example. The first MOS transistor and the second MOS transistor output a high-frequency low-voltage pulse signal.

In the example of the application, the first conduction loop formed by connecting the first power supply, the inverter circuit and the coil, or the second conduction loop formed by connecting the detection sub-circuit and the coil, may be turned on or off by turning on or off the first switch element, the second switch element and the third switch element. Therefore, the first conduction loop and the second conduction loop do not have electrical connection points there-between, and thus the first conduction loop and the second conduction loop are isolated mutually and do not affect each other.

Therefore, the second power supply is not affected by the first power supply when it detects the coil through the second conduction loop, which improves the accuracy of detecting presence or absence of the impedance on the coil. Furthermore, the first power supply is not affected by the power supply of the detection sub-circuit when it heats the coil through the first conduction loop, which greatly reduces effect of excessive current on the coil due to heating of the coil by the power supply of the detection sub-circuit.

### Fourth example

Referring again to FIG. 11, an example of the application provides a heating circuit, including an inverter circuit 21, two sub-circuits 22, a first power supply 23, a second power supply 24, a second capacitor C2 and a third capacitor C3. The sub-circuit 22 includes a first switch element 221, a second switch element 222, a heating element 223, a detection element 224, a first capacitor C1, a first MOS transistor and a second MOS transistor.

The inverter circuit 21 includes a first IGBT and a second IGBT, a collector of the first IGBT is connected to the first power supply 23, an emitter of the first IGBT is connected to a collector of the second IGBT, and an emitter of the second IGBT is grounded by PGND.

The first switch element 221 includes a first terminal, a second terminal and a third terminal, the first terminal is connected to the heating element 223, the second terminal is connected to the emitter of the first IGBT, and the third terminal is connected to a source of a first MOS transistor.

A drain of the first MOS transistor is connected to the second power supply 24, the source of the first MOS transistor is connected to a drain of the second MOS transistor, and a source of the second MOS transistor is connected to a ground point DGND and the detection element 224, respectively.

The first capacitor C1 is connected between the heating element 223 and the detection element 224.

The second capacitor C2 is connected between the first power supply 23 and the second switch element 222, and the third capacitor C3 is connected between the second capacitor C2 and the ground point PGND.

In response to the first terminal being connected to the second terminal and the second switch element 222 being turned on, the first power supply 23, the inverter circuit 21 and the heating element 223 are connected to form a first conduction loop, the first power supply 23 supplies power to the heating element 223 through the first conduction loop, and the heating element 223 generates heat based on the power supplied by the first power supply 23.

In response to the first terminal being connected to the third terminal and the second switch element 222 being turned off, the second power supply 24, the detection element 224 and the heating element 223 are connected to form a second conduction loop, and the second power supply 24 supplies power to the heating element 23 and the detection element 24 through the second conduction loop.

Here the detection element 224 detects impedance of the heating element 223 based on the power supplied by the second power supply 24, and the detected impedance controls the first power supply 23 to supply the power to the heating element 223.

In the example of the application, the first conduction loop formed by connecting the first power supply, the inverter circuit and the heating element, or the second conduction loop formed by connecting the second power supply, the detection element and the heating element, may be turned on or off by connecting or disconnecting the first terminal and the second terminal or connecting or disconnecting the first terminal and the third terminal of the first switch element, and turning on or off the second switch element. Therefore, the first conduction loop and the second conduction loop do not have electrical connection points there-between, and thus the first conduction loop and the second conduction loop are isolated mutually and do not affect each other.

Therefore, the second power supply is not affected by the first power supply when it detects the heating element through the second conduction loop, which improves the accuracy of detecting presence or absence of the impedance on the heating element. Furthermore, the first power supply is not affected by the second power supply when it heats the heating element through the first conduction loop, which greatly reduces effect of excessive current on the heating element due to heating of the heating element by the second power supply.

Furthermore, in the example of the application, only one first switch element including three terminals may be used in one sub-circuit, the first conduction loop or the second conduction loop may be turned on or off by connecting or disconnecting the first terminal and the second terminal and connecting or disconnecting the first terminal and the third terminal of the first switch element, therefore the number of components of the heating circuit may be reduced, and the hardware cost of the heating circuit may be greatly reduced.

### Fifth example

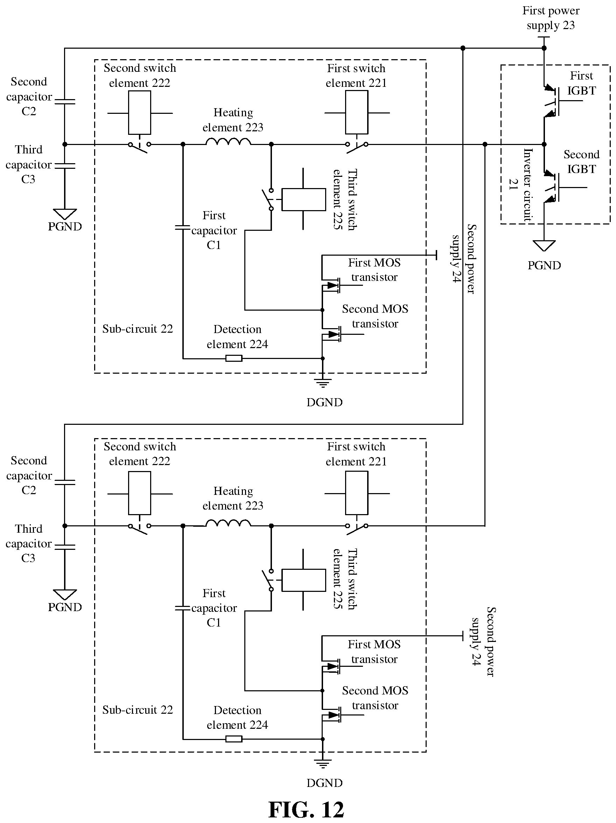

Referring again to FIG. 12, an example of the application provides a heating circuit, including an inverter circuit 21, two sub-circuits 22, a first power supply 23, a second power supply 24, a second capacitor C2 and a third capacitor C3. The sub-circuit 22 includes a first switch element 221, a second switch element 222, a third switch element 225, a heating element 223, a detection element 224, a first capacitor C1, a first MOS transistor and a second MOS transistor.

The inverter circuit 21 includes a first IGBT and a second IGBT, a collector of the first IGBT is connected to the first power supply 23, an emitter of the first IGBT is connected to a collector of the second IGBT, and an emitter of the second IGBT is grounded by PGND.

A drain of the first MOS transistor is connected to the second power supply 24, a source of the first MOS transistor is connected to a drain of the second MOS transistor, and a source of the second MOS transistor is connected to a ground point DGND and the detection element 224, respectively.

The first switch element 221 is connected between the heating element 223 and the emitter of the first IGBT, the second switch element 222 is connected to the heating element 223, and the third switch element 225 is connected between the heating element 223 and the source of the first MOS transistor.

The first capacitor C1 is connected between the heating element 223 and the detection element 224.

The second capacitor C2 is connected between the first power supply 23 and the second switch element 222, and the third capacitor C3 is connected between the second capacitor C2 and the ground point PGND.

In response to both the first switch element 221 and the second switch element 222 being turned on, and the third switch element 225 being turned off, the first power supply 23, the inverter circuit 21 and the heating element 223 are connected to form a first conduction loop, the first power supply 23 supplies power to the heating element 223 through the first conduction loop, and the heating element 223 generates heat based on the power supplied by the first power supply 23.

In response to both the first switch element 221 and the second switch element 222 being turned off, and the third switch element 225 being turned on, the second power supply 24, the detection element 224 and the heating element 223 are connected to form a second conduction loop, and the second power supply 24 supplies power to the heating element 23 and the detection element 24 through the second conduction loop.

Here the detection element 224 detects impedance of the heating element 223 based on the power supplied by the second power supply 24, and the detected impedance controls the first power supply 23 to supply the power to the heating element 223.

In the example of the application, the first conduction loop formed by connecting the first power supply, the inverter circuit and the heating element, or the second conduction loop formed by connecting the second power supply, the detection element and the heating element, may be turned on or off by turning on or off the first switch element, the second switch element and the third switch element. Therefore, the first conduction loop and the second conduction loop do not have electrical connection points there-between, and thus the first conduction loop and the second conduction loop are isolated mutually and do not affect each other.

Therefore, the second power supply is not affected by the first power supply when it detects the heating element through the second conduction loop, which improves the accuracy of detecting presence or absence of the impedance on the heating element. Furthermore, the first power supply is not affected by the second power supply when it heats the heating element through the first conduction loop, which greatly reduces effect of excessive current on the heating element due to heating of the heating element by the second power supply.

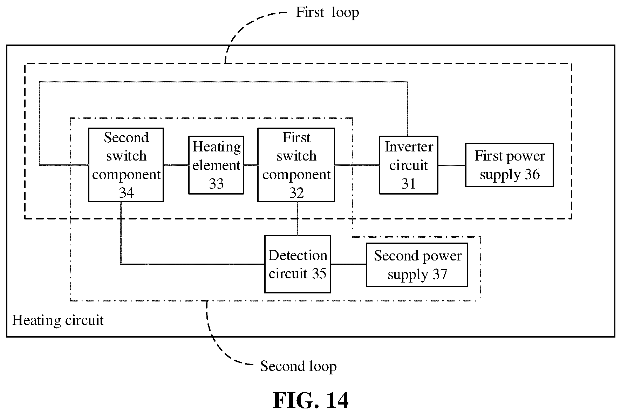

As shown in FIG. 14, an example of the application provides a heating circuit, including an inverter circuit 31, a first switch component 32, a heating element 33, a second switch component 34, a detection circuit 35, a first power supply 36 and a second power supply 37.

A first terminal of the first switch component 32 is connected to a first terminal of the heating element 33, a second terminal of the first switch component 32 is connected to a first terminal of the inverter circuit 31, and a third terminal of the first switch component 32 is connected to a first terminal of the detection circuit 35.

A first terminal of the second switch component 34 is connected to a second terminal of the heating element 33, a second terminal of the second switch component 34 is connected to a second terminal of the inverter circuit 31, and a third terminal of the second switch component 34 is connected to a second terminal of the detection circuit 35.

In response to the first terminal of the first switch component 32 being connected to the second terminal of the first switch component 32, and the first terminal of the second switch component 34 being connected to the second terminal of the second switch component 34, the first power supply 36, the heating element 33 and the inverter circuit 31 form a first loop, the first power supply 36 supplies power to the heating element 33 through the first loop, the heating element 33 generates heat based on the power supplied by the first power supply 36.

In response to the first terminal of the first switch component 32 being connected to the third terminal of the first switch component 32, and the first terminal of the second switch component 34 being connected to the third terminal of the second switch component 34, the second power supply 37, the detection circuit 35 and the heating element 33 form a second loop, the second power supply 37 supplies power to the heating element 33 and the detection circuit 35 through the second loop.

In the example of the application, the detection circuit 35 detects impedance of the heating element 33 based on the power supplied by the second power supply 37, and the detected impedance controls the first power supply 36 to supply the power to the heating element 33.

In the example of the application, a second terminal of the inverter circuit is connected to a ground point (GND) (not shown in FIG. 14).

The heating element 33 includes, but is not limited to at least one of a coil, a wire coil, an electric hot wire, an electric hot plate, an electric hot rod, or an electric hot sheet.

For example, the heating element 33 is a coil in an electromagnetic oven. When the switch component is turned off, and the second power supply supplies power to the heating element and the detection circuit. The detection circuit determines a magnitude of the detection current of the detection circuit or a voltage of a detection resistor of the heating circuit, based on the power supplied by the second power supply. A magnitude of impedance on a coil of a rice cooker is determined based on the magnitude of the detection current or the voltage of the detection resistor. Presence of a cooking device on the electromagnetic oven is determined based on the determined impedance. Therefore, the first power supply heats the rice cooker based on turning on the switch component.

The heating element 33 may include one or more heating elements.

In an example, when the heating element includes multiple heating elements connected in series.

In an example, the first switch component includes a single-pole double-throw switch and the second switch component includes a single-pole double-throw switch.

In another example, the first switch component includes a single-pole double-throw relay and the second switch component includes a single-pole double-throw relay. Therefore, in the example of the application, the first switch component and the second switch component may be turned on selectively by the single-pole double-throw relay, thereby greatly reducing danger caused by manpower to select the component to be turned on.

In an example of the application, when the first terminal of the first switch component is connected to the second terminal of the first switch component, and the first terminal of the second switch component is connected to the second terminal of the second switch component, the first loop is turned on, and when the first terminal of the first switch component is connected to the third terminal of the first switch component and the first terminal of the second switch component is connected to the third terminal of the second switch component, the second loop is turned on. Therefore, the first loop and the second loop do not have electrical connection points there-between, and thus the first loop and the second loop are isolated mutually and do not affect each other.

Therefore, the second power supply is not affected by the first power supply when it detects the heating element through the second loop, which improves the accuracy of detecting presence or absence of the impedance on the heating element. Furthermore, the first power supply is not affected by the second power supply when it heats the heating element through the first loop, which greatly reduces effect of excessive current on the heating element due to heating of the heating element by the second power supply.

In some examples, the first power supply 36 is a power supply acquiring a first voltage, and the second power supply 37 is a power supply acquiring a second voltage, and the first voltage is greater than the second voltage. Or, in response to supplying, by the first power supply 36, the power to the heating element through the first loop, a current flowing through the heating element is a first current.

In response to supplying, by the second power supply 37, the power to the heating element through the second loop, a current flowing through the heating element is a second current.

The first current is greater than the second current.

In the example of the application, the first power supply acquires a power supply greater than or equal to 110 V, and the second power supply acquires a power supply smaller than or equal to 36 V.

In an example, the first power supply acquires a DC voltage of 220 V, and the second power supply acquires a DC voltage of 5 V.

It may be understood that when the voltage acquired by the first power supply is greater than 110 V, the voltage acquired by the first power supply is a strong electricity voltage, and when the voltage acquired by the second power supply is smaller than 36 V, the voltage acquired by the second power supply is a weak electricity voltage. At this time, when the first loop is not isolated from the second loop, noise of the first loop may generate crosstalk to the second loop, so that the impedance of the heating element is detected inaccurately. Furthermore, when the second loop detects the impedance of the heating element, the actual voltage of the second loop may be a strong electricity voltage greater than 110 V, which also poses a certain danger to a person in the vicinity of the heating circuit.

In the example of the application, the first loop and the second loop may be completely turned off by the first switch component and the second switch component, therefore isolation of strong electricity from weak electricity may be achieved, noise of a strong electricity circuit (i.e., the first circuit) generating crosstalk to a weak electricity circuit (i.e., the second circuit) is greatly reduced, and danger due to low insulation performance of the weak electricity circuit is reduced.

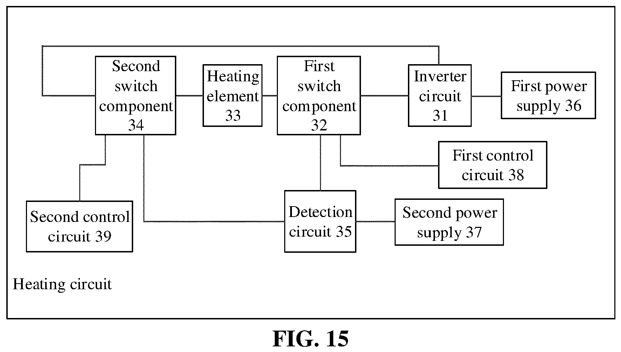

As shown in FIG. 15, in some examples, the heating circuit may include a first control circuit 38 and a second control circuit 39.

The first control circuit 38 is connected to the first switch component 32 and configured to provide a first control signal for turning on first and second terminals of the first switch component 32 or a second control signal for turning on first and third terminals of the first switch component 32.

The second control circuit 39 is connected to the second switch component 34 and configured to provide a third control signal for turning on first and second terminals of the second switch component 34 or a fourth control signal for turning on first and third terminals of the second switch component 34.

In the example of the application, both the first control signal and the third control signal may be high level signals, and both the second control signal and the fourth control signal may be low level signals. In all examples of the application, the high level signal is define relative to the low level signal, and a voltage of the high level is greater than a voltage of the low level under the same reference standard.

In the example of the application, the first control circuit 38 may be a control circuit having a signal processing capability, and the second control circuit 39 may be a control circuit having a signal processing capability.

In the example of the application, the first control circuit 38 may include a control chip or a controller, and the second control circuit 39 may include a control chip or a controller. The control chip may be a processing chip of a central processing unit, a microcontroller chip, a data signal processing chip, a programmable array processing chip, or the like. The control chip may be a processing chip of a central processing unit, a microcontroller chip, a data signal processing chip, a programmable array processing chip, or the like.

In the example of the application, a control signal may be sent to the first switch component through the first control circuit, to selectively turn on the first and second terminals of the first switch component, or turn on the first and third terminals of the first switch component. A control signal may be sent to the second switch component through the second control circuit, to selectively turn on the first and second terminals of the second switch component, or turn on the first and third terminals of the second switch component. Therefore, it is unnecessary to select the first switch component and the second switch component to be turned on by manpower, so that danger of turning on or off the first switch component and the second switch component by manpower when the first power supply or the second power supply is greater than 36 V may be greatly reduced.

As shown in FIG. 15, in some other examples, the detection circuit 35 may include a first MOS transistor (MOSFET1), a second MOS transistor (MOSFET2) and a first resistor R1.

A drain of the first MOS transistor is connected to the second power supply 37, and a source of the first MOS transistor is connected to a drain of the second MOS transistor and a third terminal of the first switch component 32, respectively.

A source of the second MOS transistor is grounded and further connected to a first terminal of the first resistor R1.

A second terminal of the first resistor R1 is connected to a third terminal of the first switch component 34.

Here both the first MOS transistor and the second MOS transistor may be MOSFETs.

It may be understood that in the example of the application, the heating element may be provided with a pulse voltage based on turning on or off the first MOS transistor and the second MOS transistor. Here pulse voltages with different frequencies may be provided by controlling a time interval between turning on and off the first MOS transistor and the second MOS transistor.

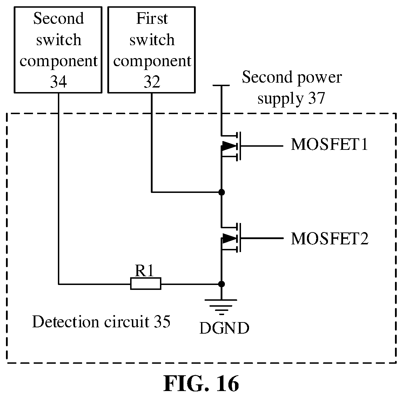

Here when the first MOS transistor is an N-channel MOS transistor, the second MOS transistor is an N-channel MOS transistor, and when the first MOS transistor is a P-channel MOS transistor, the second MOS transistor is a P-channel MOS transistor. For example, as shown in FIG. 16, both the first MOS transistor and the second MOS transistor are N-channel MOS transistors.

In an example, the second power supply is a power supply providing or acquiring a DC voltage of 3.3 V.

In the example of the application, the second power supply provides a low-voltage high-frequency pulse wave to the heating element through the first MOS transistor and the second MOS transistor. Therefore, when a cooking device is not present on the heating element, a detection current flowing through the first resistor is a first current value. When a cooking device is present on the heating element, a detection current flowing through the first resistor is a second current value. Therefore, a magnitude of the current of the first resistor is detected by an ammeter, to determine whether a cooking device with a certain impedance is present on the heating element.

Or, presence or absence of other impedances (e.g., impedance of the cooking device, other than the impedance of the heating element itself) on the heating element induces change of the current flowing through the first resistor, therefore a voltage across the first resistor changes, a magnitude of the voltage across the first resistor R1 is detected by a voltmeter, to determine whether impedance is present on the heating element.

It should be noted that in all examples of the application, the high frequency is defined relative to the low frequency, and a frequency of the high frequency is greater than a frequency of the low frequency under the same reference standard. In some examples, the high frequency is a frequency greater than 50 Hz.

In some examples, when the detection circuit includes a first capacitor and a second capacitor, the second power supply is a power supply supplying a third voltage. A first terminal of the first capacitor is connected to the second power supply, and a second terminal of the first capacitor is connected to a first terminal of the second capacitor, and a second terminal of the second capacitor is grounded.

When the detection circuit includes a first MOS transistor and a second MOS transistor, the second power supply is a power supply supplying a fourth voltage. A drain of the first MOS transistor is connected to the second power supply, and a source of the first MOS transistor is connected to a drain of the second MOS transistor, and a source of the second MOS transistor is grounded.

The third voltage is greater than the fourth voltage.

In the example of the application, when the pulse wave is provided based on two capacitors in the detection circuit, rather than providing the pulse wave based on two MOS transistors, the voltage value acquired or provided by the second power supply is relatively high. Therefore, it is advantageous to improve the accuracy of detecting the impedance of the heating element based on the two capacitors in the detection circuit.

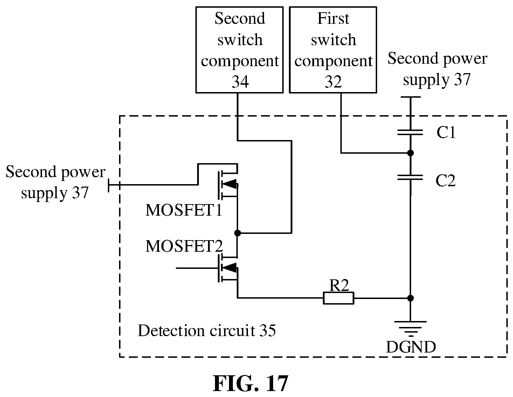

As shown in FIG. 17, in some examples, the detection circuit 35 may further include a first capacitor C1, a second capacitor C2 and a second resistor R2.

A first terminal of the first capacitor C1 is connected to the second power supply 37, and a second terminal of the first capacitor C1 is connected to a first terminal of the second capacitor C2 and a third terminal of the first switch component 32, respectively.

A second terminal of the second capacitor C2 is grounded by DGND and further connected to a first terminal of the second resistor R2.

A second terminal of the second resistor R2 is connected to a third terminal of the second switch component 34.

In an example, the detection circuit of FIG. 17 includes a first resistor R1 connected between the second resistor R2 and the second capacitor C2.

In an example, the second power supply is a power supply providing or acquiring a DC voltage of 5 V.

In the example of the application, the second power supply may provide a low-voltage high-frequency pulse wave to the heating element through the first MOS transistor and the second MOS transistor. Furthermore, the impedance of the heating element may be matched by the first capacitor C1 and the second capacitor. Therefore, when a cooking device is not present on the heating element 33, a detection current flowing through the second resistor is a first current value, and when a cooking device is present on the heating element, a detection current flowing through the second resistor is a second current value. Therefore, a magnitude of the current of the second resistor may be detected by an ammeter or a magnitude of the voltage across the second resistor may be detected by a voltmeter, to determine whether a cooking device with a certain impedance is present on the heating element.

In the example of the application, as shown in FIG. 17, the first terminal of the second resistor R1 is grounded, therefore the voltage relative to the first terminal of the second resistor is zero. Therefore, the voltage across the second resistor may be calculated by detecting only a potential at the second terminal of the second resistor (for example, a voltage sensor is provided at the second terminal of the second resistor, to detect the potential at the second terminal of the second resistor). Therefore, the example of the application may also simplify operations of measuring the voltage across the second resistor.

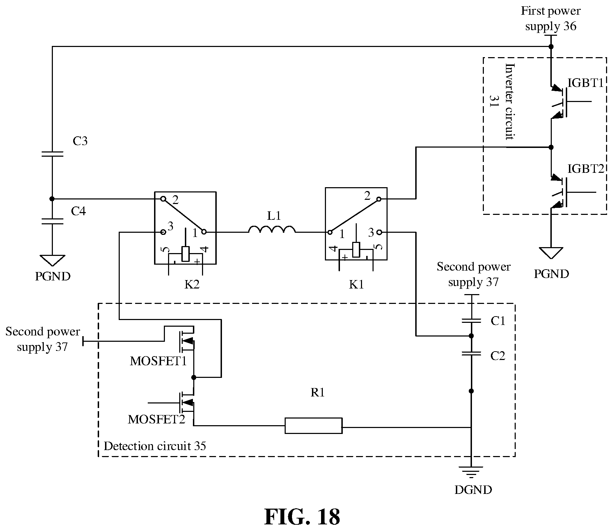

As shown in FIG. 18, in some examples, the inverter circuit 31 may include a first IGBT (IGBT1) and a second IGBT (IGBT2).

A collector of the first IGBT is connected to the first power supply 36, an emitter of the first IGBT is connected to a collector of the second IGBT, and an emitter of the second IGBT is grounded.

A first terminal of the first switch component K1 is connected to the emitter of the first IGBT, and a second terminal of the second switch component K2 is connected to the collector of the first IGBT.

Here the first switch component K1 is the first switch component 32 in the above example, and the second switch component K2 is the second switch component 34 in the above example.

In an example, the first power supply acquires a DC voltage of 220 V. After the DC voltage of 220 V passes through the inverter circuit 31, an AC voltage of 220 V is output.

In another example, the first power supply acquires an AC voltage of 220 V, which is an AC voltage with only a positive phase voltage (positive half wave). After the voltage acquired by the first power supply passes through the inverter circuit 11, an AC voltage with positive and negative phases is output.

In yet another example, the first power supply acquires an AC voltage of 220 V (municipal electricity). A rectifying circuit is included between the first power supply 36 and the inverter circuit 31, to convert the AC voltage of 220 V into a DC voltage of 220 V. The inverter circuit 31 converts the DC voltage of 220 V into the AC voltage of 220 V.

The AC power supply includes, but is not limited to one of a sine wave AC power supply or a square wave AC power supply.

In the example of the application, a signal frequency of the first power supply may be adjusted by frequencies of turning on and off the first IGBT and the second IGBT. Therefore, the first power supply may be converted into a high-frequency pulse wave through the inverter circuit composed of the first IGBT and the second IGBT, to supply power to the heating element. Furthermore, the IGBT used in the inverter circuit has advantages of both a high input impedance of the MOS transistor and a low turn-on voltage drop of a power transistor. Therefore, the example of the application may improve the stability and safe working voltage region of supplying power to the heating element, and further improve the safety of supplying power to the heating element.

In some other examples, the inverter circuit 31 may include a third MOS transistor (MOSFET3) and a fourth MOS transistor (MOSFET4).

A drain of the third MOS transistor is connected to the first power supply 36, a source of the third MOS transistor is connected to a drain of the fourth MOS transistor, and a source of the fourth MOS transistor is grounded by PGND.

A first terminal of the first switch component K1 is connected to the source of the third MOS transistor, and a second terminal of the second switch component K2 is connected to the drain of the third MOS transistor.

Here when the third MOS transistor is an N-channel MOS transistor, the fourth MOS transistor is an N-channel MOS transistor, and when the third MOS transistor is a P-channel MOS transistor, the fourth MOS transistor is a P-channel MOS transistor.

In the example of the application, the heating element may be supplied with a high-frequency pulse wave by alternately turning on the third MOS transistor and the fourth MOS transistor.

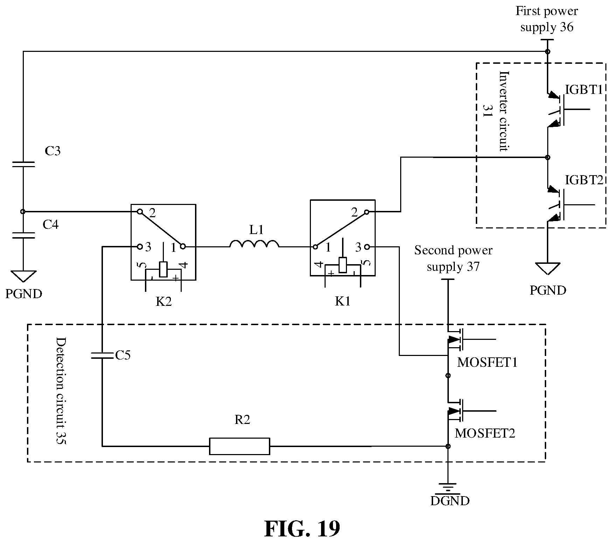

As shown in FIG. 19, in some examples, the detection circuit may further include a fifth capacitor C5.

A first terminal of the fifth capacitor C5 is connected to a second terminal of the second resistor R2, a second terminal of the fifth capacitor C5 is connected to a third terminal of the second switch component K2.

Here the second switch component K2 is the second switch component 34 in the above example.

In the example of the application, the fifth capacitor C5 is a matching capacitor of the heating element. Here an oscillation frequency of the heating element in the second loop may be adjusted by adjusting a capacitive resistance of the fifth capacitor, the impedance of the heating element, the resistance of the second resistor, or the like. Therefore, the accuracy of detecting presence or absence of the impedance of the heating element may be improved.

Referring again to FIG. 19, in some examples, the heating circuit may further include a third capacitor C3 and a fourth capacitor C4.

The third capacitor C3 is connected between the first power supply 36 and a second terminal of the second switch component K2.

A first terminal of the fourth capacitor C4 is connected to the second terminal of the second switch component K2, and a second terminal of the fourth capacitor C4 is grounded.

The third capacitor C3 and the fourth capacitor C4 cooperate to control an alternating frequency of the heating current of the heating element L1.

Here the heating element L1 is the heating element 33 in the above example.

In the example of the application, the third capacitor C3 and the fourth capacitor C4 are matching capacitors of the heating element L1. Here an oscillation frequency (i.e., an alternating frequency) of the heating element in the first loop may be adjusted by adjusting capacitive resistances of the third capacitor and the fourth capacitor, and the impedance of the heating element.

In the example of the application, the alternating frequency of the heating element in the first loop may be determined by the second capacitor and the third capacitor, so that the heating element operates at a suitable alternating frequency and the heating element has a suitable heating current.

### Sixth example

Referring again to FIG. 18, an example of the application provides a heating circuit, including an inverter circuit 31, a first switch component K1, a heating element L1, a second switch component K2, a detection circuit 35, a first power supply 36, a second power supply 37, a third capacitor C3 and a fourth capacitor C4.

The inverter circuit 31 includes a first IGBT (IGBT1) and a second IGBT (IGBT2).

The detection circuit includes a first capacitor C1, a second capacitor C2, a first resistor R1, a first MOS transistor (MOSFET1) and a second MOS transistor (MOSFET2).

A first terminal of the first switch component K1 is connected to a first terminal of the heating element L1, a second terminal of the first switch component K1 is connected to an emitter of the first IGBT, and a third terminal of the first switch component K1 is connected to a second terminal of the first capacitor C1.

A first terminal of the second switch component K2 is connected to a second terminal of the heating element L1, a second terminal of the second switch component K2 is connected to a collector of the first IGBT, and a third terminal of the second switch component K2 is connected to a second terminal of the first resistor R1.

The collector of the first IGBT is also connected to the first power supply 36, and an emitter of the second IGBT is also grounded by PGND.

A first terminal of the first capacitor C1 is connected to the second power supply 37, a second terminal of the first capacitor C1 is connected to a first terminal of the second capacitor C2, and a second terminal of the second capacitor C2 is connected to the first resistor R1 and a ground point DGND, respectively.

A drain of the first MOS transistor is connected to the second power supply 37, a source of the first MOS transistor is connected to a drain of the second MOS transistor, a drain of the second MOS transistor is connected to the second switch component, and a source of the second MOS transistor is connected to a second terminal of the first resistor R1.

In response to the first terminal of the first switch component K1 being connected to the second terminal of the first switch component K1, and the first terminal of the second switch component K2 being connected to the second terminal of the second switch component K2, the first power supply 36, the heating element L1 and the inverter circuit 11 form a first loop, the first power supply 36 supplies power to the heating element L1 through the first loop, and the heating element L1 generates heat based on the power supplied by the first power supply 36.

In response to the first terminal of the first switch component K1 being connected to the third terminal of the first switch component K1, and the first terminal of the second switch component K2 being connected to the third terminal of the second switch component K2, the second power supply 37, the detection circuit 35 and the heating element L1 form a second loop, and the second power supply 37 supplies power to the heating element L1 and the detection circuit 35 through the second loop. The detection circuit 35 detects impedance of the heating element L1 based on the power supplied by the second power supply 37, and the detected impedance controls the first power supply 36 to supply the power to the heating element L2.

In the example of the application, the first loop and the second loop do not have electrical connection points there-between, and thus the first loop and the second loop are isolated mutually and do not affect each other. The second power supply is not affected by the first power supply when it detects the heating element through the second loop, which improves the accuracy of detecting presence or absence of the impedance on the heating element. Furthermore, the first power supply is not affected by the second power supply when it heats the heating element through the first loop, which greatly reduces effect of excessive current on the heating element due to heating of the heating element by the second power supply.

### Seventh example

As shown in FIG. 19, an example of the application provides a heating circuit, including an inverter circuit 31, a first switch component K1, a heating element L1, a second switch component K2, a detection circuit 35, a first power supply 36, a second power supply 37, a third capacitor C3 and a fourth capacitor C4.

The inverter circuit 31 includes a first IGBT (IGBT1) and a second IGBT (IGBT2).

The detection circuit includes a first MOS transistor (MOSFET1), a second MOS transistor (MOSFET2), a second resistor R2 and a fifth capacitor C5.

A first terminal of the first switch component K1 is connected to a first terminal of the heating element L1, a second terminal of the first switch component K1 is connected to an emitter of the first IGBT, and a third terminal of the first switch component K1 is connected to a source of the first MOS transistor.

A first terminal of the second switch component K2 is connected to a second terminal of the heating element L1, a second terminal of the second switch component K2 is connected to a collector of the first IGBT, and a third terminal of the second switch component K2 is connected to a second terminal of the fifth capacitor C5.

The collector of the first IGBT is also connected to the first power supply 36, and an emitter of the second IGBT is also grounded by PGND.

A drain of the first MOS transistor is connected to the second power supply 37, a source of the first MOS transistor is connected to a drain of the second MOS transistor, a source of the second MOS transistor is connected to a first terminal of the second resistor R2 and a ground point DGND, respectively, and the first terminal of the second resistor R2 is connected to a first terminal of the fifth capacitor C5.

In response to the first terminal of the first switch component K1 being connected to the second terminal of the first switch component K1, and the first terminal of the second switch component K2 being connected to the second terminal of the second switch component K2, the first power supply 36, the heating element L1 and the inverter circuit 31 form a first loop, the first power supply 36 supplies power to the heating element L1 through the first loop, and the heating element L1 generates heat based on the power supplied by the first power supply 36.

In response to the first terminal of the first switch component K1 being connected to the third terminal of the first switch component K1, and the first terminal of the second switch component K2 being connected to the third terminal of the second switch component K2, the second power supply 37, the detection circuit 3, and the heating element L1 form a second loop, and the second power supply 37 supplies power to the heating element L1 and the detection circuit 35 through the second loop. The detection circuit 35 detects impedance of the heating element L1 based on the power supplied by the second power supply 17, and the detected impedance controls the first power supply 36 to supply the power to the heating element L2.

In the example of the application, the first loop and the second loop do not have electrical connection points there-between, and thus the first loop and the second loop are isolated mutually and do not affect each other. The second power supply is not affected by the first power supply when it detects the heating element through the second loop, which improves the accuracy of detecting presence or absence of the impedance on the heating element. Furthermore, the first power supply is not affected by the second power supply when it heats the heating element through the first loop, which greatly reduces effect of excessive current on the heating element due to heating of the heating element by the second power supply.

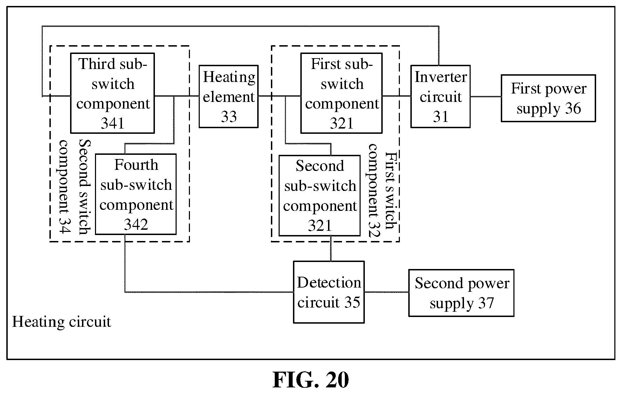

As shown in FIG. 20, an example of the application further provides a heating circuit, including an inverter circuit 31, a first switch component 32, a heating element 33, a second switch component 34, a detection circuit 35, a first power supply 36 and a second power supply 37.

The first switch component 32 includes a first sub-switch component 321 and a second sub-switch component 322, and the second switch component 34 includes a third sub-switch component 341 and a fourth sub-switch component 342.

A first terminal of the first sub-switch component 321 is connected to a first terminal of the heating element 33, a second terminal of the first sub-switch component 321 is connected to a first terminal of the inverter circuit 31, a first terminal of the second sub-switch component 322 is connected to a first terminal of the heating element 33, and a second terminal of the second sub-switch component 322 is connected to a first terminal of detection circuit 35.

A first terminal of the third sub-switch component 341 is connected to a second terminal of the heating element 33, a second terminal of the third sub-switch component 341 is connected to a second terminal of the inverter circuit 31, a first terminal of the fourth sub-switch component 342 is connected to a second terminal of the heating element 33, and a second terminal of the fourth sub-switch component 342 is connected to a second terminal of detection circuit 35.

In response to the first sub-switch component 321 being turned on and the second sub-switch component 322 being turned off, and the third sub-switch component 341 being turned on and the fourth sub-switch component 342 being turned off, the first power supply 36, the inverter circuit 31 and the heating element 33 form a first loop, the first power supply 36 supplies power to the heating element 33 through the first loop, and the heating element 33 generates heat based on the power supplied by the first power supply 36.

In response to the first sub-switch component 321 being turned off and the second sub-switch component 322 being turned on, and the third sub-switch component 341 being turned off and the fourth sub-switch component 342 being turned on, the second power supply 37 supplies power to the heating element 33 and the detection circuit 35 through the second loop.

In the example of the application, the detection circuit 35 detects impedance of the heating element 33 based on the power supplied by the second power supply 37, and the detected impedance controls the first power supply 36 to supply the power to the heating element 33.

In the example of the application, each of the first sub-switch component, the second sub-switch component, the third sub-switch component and the fourth sub-switch component may be a single-pole single-throw switch, or, each of the first sub-switch component, the second sub-switch component, the third sub-switch component and the fourth sub-switch component may be a single-pole single-throw relay.

In the example of the application, when the first sub-switch component is turned on and the second sub-switch component is turned off, and the third sub-switch component is turned on and the fourth sub-switch component is turned off, the first loop is turned on. When the first sub-switch component is turned off and the second sub-switch component is turned on, and the third sub-switch component is turned off and the fourth sub-switch component is turned on, the second loop is turned on. Therefore, the first loop and the second loop do not have electrical connection points there-between, and thus the first loop and the second loop are isolated mutually and do not affect each other.

Therefore, the second power supply is not affected by the first power supply when it detects the heating element through the second loop, which improves the accuracy of detecting presence or absence of the impedance on the heating element. Furthermore, the first power supply is not affected by the second power supply when it heats the heating element through the first loop, which greatly reduces effect of excessive current on the heating element due to heating of the heating element by the second power supply.

It may be understood that in the example of the application, the first switch component of a single-pole double-throw type shown in FIG. 14 is replaced with the first sub-switch component and the second sub-switch component of a single-pole single-throw type, and the second switch component of a single-pole double-throw type shown in FIG. 14 is replaced with the third sub-switch component and the fourth sub-switch component of a single-pole single-throw type. Therefore, reference is made to descriptions of the detection circuit, the inverter circuit, or the like in the heating circuit according to the example of the application.

Similar to corresponding descriptions of the detection circuit, the inverter circuit, or the like in the heating circuit shown in FIGS. 14 to 19, only a corresponding change occurs in the connection relationship of the switch components (for example, the first terminal of the first sub-switch component and the first terminal of the second sub-switch component in the example shown in FIG. 14 may correspond to the second terminal of the first switch component in any of the examples shown in FIGS. 14 to 19, and the second terminal of the first sub-switch component in the example shown in FIG. 14 may correspond to the second terminal of the first switch component in any of the examples shown in FIGS. 14 to 19, and the second terminal of the second sub-switch component in the example shown in FIG. 14 may correspond to the third terminal of the first switch component in any of the examples shown in FIGS. 14 to 19, and the first terminal of the third sub-switch component and the first terminal of the fourth sub-switch component of the example shown in FIG. 14 may correspond to the second terminal of the second switch component in any of the examples shown in FIGS. 14 to 19, and the second terminal of the third sub-switch component in the example shown in FIG. 14 may correspond to the second terminal of the second switch component in any of the examples shown in FIGS. 14 to 19, and the second terminal of the fourth sub-switch component in the example shown in FIG. 14 may correspond to the third terminal of the second switch component in any of the examples shown in FIGS. 14 to 19).

For example, in some examples, the detection circuit may include a first capacitor C1, a second capacitor C2 and a second resistor R1.

A first terminal of the first capacitor C1 is connected to the second power supply 36, and a second terminal of the first capacitor C1 is connected to the second terminal of the second sub-switch component 321 and a first terminal of the second capacitor C2, respectively.

A second terminal of the second capacitor C2 is grounded and further connected to a first terminal of the second resistor R1.

A second terminal of the second resistor R2 is connected to the second terminal of the fourth sub-switch component 342.

For another example, in some other examples, the detection circuit may include a first MOS transistor (MOSFET1), a second MOS transistor (MOSFET2) and a second resistor R2.

A drain of the first MOS transistor is connected to the second power supply 36, and a source of the first MOS transistor is connected to a drain of the second MOS transistor and the second terminal of the second sub-switch component 322, respectively.

A source of the second MOS transistor is grounded and further connected to a first terminal of the second resistor.

A second terminal of the second resistor is connected to the second terminal of the fourth sub-switch component 342.

Advantageous effects of the corresponding detection circuit, inverter circuit, or the like in the heating circuit shown in FIGS. 14 to 19 will not be elaborated. As to technical details not disclosed in the examples of the application based on examples of the detection circuit, the inverter circuit, or the like in the heating circuit, please refer to the descriptions of examples of the corresponding detection circuit, inverter circuit, or the like in the heating circuit.

The features disclosed in several product embodiments provided by the application may be combined arbitrarily without conflict, to obtain new product embodiments.

### Industrial applicability

The embodiment of the application provides a heating circuit, including an inverter circuit, a heating element, a detection element, a first power supply and a second power supply. The first power supply, the heating element and the inverter circuit form a first loop, and the second power supply, the detection element and the heating element form a second loop. The first power supply supplies power to the heating element through the first loop, and the heating element generates heat based on the power supplied by the first power supply. The second power supply supplies power to the heating element and the detection element through the second loop. The heating circuit provided by the embodiment of the application may allow isolation of the first loop from the second loop, to at least accurately detect whether a cooking device with a certain impedance is present on the heating element, and allow the heating of the heating element not be affected by the second power supply to induce effect of excessive current of the heating element.

## Claims

1. A heating circuit, comprising an inverter circuit (11, 21, 31), at least one sub-circuit (12, 22), a first power supply (13, 23, 36) and a second power supply (14, 24, 37), wherein the sub-circuit (12, 22) comprises a switch module (121), a heating element (122, 223, 33) and a detection element (123, 224), wherein the switch module (121) is connected to the heating element (122, 223, 33) and the detection element (123, 224), in response to the switch module (121) being placed in a first switch state, the first power supply (13, 23, 36), the inverter circuit (11, 21, 31) and the heating element (122, 223, 33) are connected to form a first conduction loop, wherein the first power supply (13, 23, 36) supplies power to the heating element (122, 223, 33) through the first conduction loop, and the heating element (122, 223, 33) generates heat based on the power supplied by the first power supply (13, 23, 36), and in response to the switch module (121) being placed in a second switch state, the second power supply (14, 24, 37), the detection element (123, 224) and the heating element (122, 223, 33) are connected to form a second conduction loop, and wherein the second power supply (14, 24, 37) supplies power to the heating element (122, 223, 33) and the detection element (123, 224) through the second conduction loop.

2. The heating circuit of claim 1, wherein the switch module (121) comprises: a first switch element (1210, 221) connected to the heating element (122, 223, 33); and a second switch element (1211, 222) connected to the detection element (123, 224), in response to the first switch element (1210, 221) being turned on and the second switch element (1211, 222) being turned off, the switch module (121) is placed in the first switch state, and in response to the first switch element (1210, 221) being turned off and the second switch element (1211, 222) being turned on, the switch module (121) is placed in the second switch state.

3. The heating circuit of claim 1, wherein the switch module (121) comprises: a first terminal connected to the heating element (122, 223, 33); a second terminal connected to the inverter circuit (11, 21, 31); and a third terminal connected to the detection element (123, 224), in response to the first terminal being connected to the second terminal, the switch module (121) is placed in the first switch state, and in response to the first terminal being connected to the third terminal, the switch module (121) is placed in the second switch state.

4. The heating circuit of claim 1, wherein the sub-circuit (12, 22) comprises N sub-circuits connected in parallel, and N is an integer greater than 1.

5. The heating circuit of claim 1, wherein the sub-circuit (12, 22) comprises a first Metal Oxide Semiconductor, MOS, transistor and a second MOS transistor, a drain of the first MOS transistor is connected to the second power supply (14, 24, 37), and a source of the first MOS transistor is connected to a drain of the second MOS transistor and the detection element (123, 224), respectively, and a source of the second MOS transistor is connected to a ground point.

6. The heating circuit of claim 1 or 5, wherein the sub-circuit (12, 22) further comprises: a first capacitor (C1) connected between the switch module (121) and the detection element (123, 224) and configured to control an alternating frequency of a detection current of the heating element (122, 223, 33).

7. The heating circuit of claim 1, wherein the detection element (123, 224) comprises a first resistor (R1) and a second resistor (R2), and the sub-circuit (12, 22) comprises a third Metal Oxide Semiconductor, MOS, transistor and a fourth MOS transistor, the first resistor (R1) is connected between a drain of the third MOS transistor and the second power supply (14, 24, 37), the second resistor (R2) is connected between a source of the fourth MOS transistor and a ground point, a source of the third MOS transistor is connected to a drain of the fourth MOS transistor and the switch module (121), respectively, and the second resistor (R2) detects, based on the power supplied by the second power supply (14, 24, 37), resistance of the heating element (122, 223, 33).

8. The heating circuit of any one of claims 1-5 and 7, wherein the first power supply (13, 23, 36) is a power supply providing a first voltage, the second power supply (14, 24, 37) is a power supply providing a second voltage, and the first voltage is greater than the second voltage, or, in response to supplying, by the first power supply (13, 23, 36), the power to the heating element (122, 223, 33) through the first conduction loop, a current flowing through the heating element (122, 223, 33) is a first current, in response to supplying, by the second power supply (14, 24, 37), the power to the heating element (122, 223, 33) through the second conduction loop, a current flowing through the heating element (122, 223, 33) is a second current, and the first current is greater than the second current.

9. The heating circuit of claim 1, wherein the inverter circuit (11, 21, 31) comprises a first Insulated Gate Bipolar Transistor, IGBT, and a second IGBT, a collector of the first IGBT is connected to the first power supply (13, 23, 36), and an emitter of the first IGBT is connected to the switch module (121) and a collector of the second IGBT, respectively, and an emitter of the second IGBT is grounded.

10. The heating circuit of claim 1, further comprising: a second capacitor (C2) connected between the heating element (122, 223, 33) and a ground point, in response to the switch module (121) being placed in the first switch state, the second capacitor (C2) configured to control an alternating frequency of a heating current of the heating element (122, 223, 33), and in response to the switch module (121) being placed in the second switch state, the second capacitor (C2) configured to control an alternating frequency of a detection current of the heating element (122, 223, 33).

## Patentansprüche

1. Heizschaltkreis, der einen Wechselrichterschaltkreis (11, 21, 31), mindestens einen Teilschaltkreis (12, 22), eine erste Stromversorgung (13, 23, 36) und eine zweite Stromversorgung (14, 24, 37) umfasst, wobei der Teilschaltkreis (12, 22) ein Schaltmodul (121), ein Heizelement (122, 223, 33) und ein Erfassungselement (123, 224) umfasst, wobei das Schaltmodul (121) mit dem Heizelement (122, 223, 33) und dem Erfassungselement (123, 224) verbunden ist, wobei die erste Stromversorgung (13, 23, 36), der Wechselrichterschaltkreis (11, 21, 31) und das Heizelement (122, 223, 33) als Reaktion darauf, dass das Schaltmodul (121) in einen ersten Schaltzustand versetzt wird, verbunden werden und so eine erste Leitungsschleife bilden, wobei die erste Stromversorgung (13, 23, 36) das Heizelement (122, 223, 33) über die erste Leitungsschleife mit Strom versorgt und das Heizelement (122, 223, 33) auf der Grundlage des von der ersten Stromversorgung (13, 23, 36) gelieferten Stroms Wärme erzeugt, und die zweite Stromversorgung (14, 24, 37), das Erfassungselement (123, 224) und das Heizelement (122, 223, 33) als Reaktion darauf, dass das Schaltmodul (121) in einen zweiten Schaltzustand versetzt wird, verbunden werden und so eine zweite Leitungsschleife bilden und die zweite Stromversorgung (14, 24, 37) das Heizelement (122, 223, 33) und das Erfassungselement (123, 224) über die zweite Leitungsschleife mit Strom versorgt.

2. Heizschaltkreis nach Anspruch 1, wobei das Schaltmodul (121) Folgendes umfasst: ein erstes Schaltelement (1210, 221), das mit dem Heizelement (122, 223, 33) verbunden ist, und ein zweites Schaltelement (1211, 222), das mit dem Erfassungselement (123, 224) verbunden ist, wobei das Schaltmodul (121) als Reaktion auf ein Einschalten des ersten Schaltelements (1210, 221) und ein Ausschalten des zweiten Schaltelements (1211, 222) in den ersten Schaltzustand und das Schaltmodul (121) als Reaktion auf ein Ausschalten des ersten Schaltelements (1210, 221) und ein Einschalten des zweiten Schaltelements (1211, 222) in den zweiten Schaltzustand versetzt wird.

3. Heizschaltkreis nach Anspruch 1, wobei das Schaltmodul (121) Folgendes umfasst: einen ersten Anschluss, der mit dem Heizelement (122, 223, 33) verbunden ist, einen zweiten Anschluss, der mit dem Wechselrichterschaltkreis (11, 21, 31) verbunden ist, und einen dritten Anschluss, der mit dem Erfassungselement (123, 224) verbunden ist, wobei das Schaltmodul (121) als Reaktion auf das Verbinden des ersten Anschlusses mit dem zweiten Anschluss in den ersten Schaltzustand und das Schaltmodul (121) als Reaktion auf das Verbinden des ersten Anschlusses mit dem dritten Anschluss in den zweiten Schaltzustand versetzt wird.

4. Heizschaltkreis nach Anspruch 1, wobei der Teilschaltkreis (12, 22) N parallelgeschaltete Teilschaltkreise umfasst und N eine Ganzzahl größer als 1 ist.

5. Heizschaltkreis nach Anspruch 1, wobei der Teilschaltkreis (12, 22) einen ersten Metalloxidhalbleiter-MOS-Transistor und einen zweiten MOS-Transistor umfasst, ein Drain-Anschluss des ersten MOS-Transistors mit der zweiten Stromversorgung (14, 24, 37) und ein Source-Anschluss des ersten MOS-Transistors mit einem Drain-Anschluss des zweiten MOS-Transistors beziehungsweise dem Erfassungselement (123, 224) und ein Source-Anschluss des zweiten MOS-Transistors mit einem Massepunkt verbunden ist.

6. Heizschaltkreis nach Anspruch 1 oder 5, wobei der Teilschaltkreis (12, 22) ferner Folgendes umfasst: einen ersten Kondensator (C1), der zwischen das Schaltmodul (121) und das Erfassungselement (123, 224) geschaltet und so konfiguriert ist, dass er eine Wechselfrequenz eines Erfassungsstroms des Heizelements (122, 223, 33) steuert.

7. Heizschaltkreis nach Anspruch 1, wobei das Erfassungselement (123, 224) einen ersten Widerstand (R1) und einen zweiten Widerstand (R2) und der Teilschaltkreis (12, 22) einen dritten Metalloxidhalbleiter-MOS-Transistor und einen vierten MOS-Transistor umfasst, wobei der erste Widerstand (R1) zwischen einen Drain-Anschluss des dritten MOS-Transistors und die zweite Stromversorgung (14, 24, 37) geschaltet ist, der zweite Widerstand (R2) zwischen einen Source-Anschluss des vierten MOS-Transistors und einen Massepunkt geschaltet ist, ein Source-Anschluss des dritten MOS-Transistors mit einem Drain-Anschluss des vierten MOS-Transistors beziehungsweise dem Schaltmodul (121) verbunden ist und der zweite Widerstand (R2) auf der Grundlage des von der zweiten Stromversorgung (14, 24, 37) gelieferten Stroms einen elektrischen Widerstand des Heizelements (122, 223, 33) erfasst.

8. Heizschaltkreis nach einem der Ansprüche 1-5 und 7, wobei es sich bei der ersten Stromversorgung (13, 23, 36) um eine Stromversorgung handelt, die eine erste Spannung bereitstellt, und bei der zweiten Stromversorgung (14, 24, 37) um eine Stromversorgung, die eine zweite Spannung bereitstellt, und die erste Spannung höher ist als die zweite oder es sich bei einem Strom, der als Reaktion auf das Versorgen des Heizelements (122, 223, 33) mit Strom durch die erste Stromversorgung (13, 23, 36) über die erste Leitungsschleife durch das Heizelement (122, 223, 33) fließt, um einen ersten Strom handelt und bei einem Strom, der als Reaktion auf das Versorgen des Heizelements (122, 223, 33) mit Strom durch die zweite Stromversorgung (14, 24, 37) über die zweite Leitungsschleife durch das Heizelement (122, 223, 33) fließt, um einen zweiten Strom handelt und der erste Strom höher ist als der zweite.

9. Heizschaltkreis nach Anspruch 1, wobei der Wechselrichterschaltkreis (11, 21, 31) einen ersten Bipolartransistor mit isoliertem Gate-Anschluss IGBT und einen zweiten IGBT umfasst, ein Kollektor des ersten IGBT mit der ersten Stromversorgung (13, 23, 36) und ein Emitter des ersten IGBT mit dem Schaltmodul (121) beziehungsweise einem Kollektor des zweiten IGBT verbunden ist und ein Emitter des zweiten IGBT geerdet ist.

10. Heizschaltkreis nach Anspruch 1, der ferner Folgendes umfasst: einen zweiten Kondensator (C2), der zwischen das Heizelement (122, 223, 33) und einen Massepunkt geschaltet ist, wobei der zweite Kondensator (C2) so konfiguriert ist, dass er als Reaktion auf das Versetzen des Schaltmoduls (121) in den ersten Schaltzustand eine Wechselfrequenz eines Heizstroms des Heizelements (122, 223, 33) und der zweite Kondensator (C2) so konfiguriert ist, dass er als Reaktion auf das Versetzen des Schaltmoduls (121) in den zweiten Schaltzustand eine Wechselfrequenz eines Erfassungsstroms des Heizelements (122, 223, 33) steuert.

## Revendications

1. Circuit de chauffage, comportant un circuit inverseur (11, 21, 31), au moins un sous-circuit (12, 22), une première alimentation électrique (13, 23, 36) et une deuxième alimentation électrique (14, 24, 37), dans lequel le sous-circuit (12, 22) comporte un module de commutation (121), un élément chauffant (122, 223, 33) et un élément de détection (123, 224), dans lequel le module de commutation (121) est connecté à l'élément chauffant (122, 223, 33) et à l'élément de détection (123, 224), en réponse au fait que le module de commutation (121) est placé dans un premier état de commutation, la première alimentation électrique (13, 23, 36), le circuit inverseur (11, 21, 31) et l'élément chauffant (122, 223, 33) sont connectés pour former une première boucle de conduction, dans lequel la première alimentation électrique (13, 23, 36) alimente l'élément chauffant (122, 223, 33) par le biais de la première boucle de conduction, et l'élément chauffant (122, 223, 33) génère de la chaleur sur la base de l'alimentation fournie par la première alimentation électrique (13, 23, 36), et en réponse au fait que le module de commutation (121) est placé dans un deuxième état de commutation, la deuxième alimentation électrique (14, 24, 37), l'élément de détection (123, 224) et l'élément chauffant (122, 223, 33) sont connectés pour former une deuxième boucle de conduction, et dans lequel la deuxième alimentation électrique (14, 24, 37) alimente l'élément chauffant (122, 223, 33) et l'élément de détection (123, 224) par le biais de la deuxième boucle de conduction.

2. Circuit de chauffage selon la revendication 1, dans lequel le module de commutation (121) comporte : un premier élément de commutation (1210, 221) connecté à l'élément de chauffage (122, 223, 33) ; et un deuxième élément de commutation (1211, 222) connecté à l'élément de détection (123, 224), en réponse au fait que le premier élément de commutation (1210, 221) est mis sous tension et que le deuxième élément de commutation (1211, 222) est mis hors tension, le module de commutation (121) est placé dans le premier état de commutation, et en réponse au fait que le premier élément de commutation (1210, 221) est mis hors tension et que le deuxième élément de commutation (1211, 222) est mis sous tension, le module de commutation (121) est placé dans le deuxième état de commutation.

3. Circuit de chauffage selon la revendication 1, dans lequel le module de commutation (121) comporte : une première borne connectée à l'élément chauffant (122, 223, 33) ; une deuxième borne connectée au circuit inverseur (11, 21, 31) ; et une troisième borne connectée à l'élément de détection (123, 224), en réponse au fait que la première borne est connectée à la deuxième borne, le module de commutation (121) est placé dans le premier état de commutation, et en réponse au fait que la première borne est connectée à la troisième borne, le module de commutation (121) est placé dans le deuxième état de commutation.

4. Circuit de chauffage selon la revendication 1, dans lequel le sous-circuit (12, 22) comporte N sous-circuits connectés en parallèle, et N est un entier supérieur à 1.

5. Circuit de chauffage selon la revendication 1, dans lequel le sous-circuit (12, 22) comporte un premier transistor MOS à métal-oxyde semiconducteur et un deuxième transistor MOS, un drain du premier transistor MOS est connecté à la deuxième alimentation électrique (14, 24, 37), et une source du premier transistor MOS est connectée à un drain du deuxième transistor MOS et à l'élément de détection (123, 224), respectivement, et une source du deuxième transistor MOS est connectée à un point de masse.

6. Circuit de chauffage selon la revendication 1 ou la revendication 5, dans lequel le sous-circuit (12, 22) comporte par ailleurs : un premier condensateur (C1) connecté entre le module de commutation (121) et l'élément de détection (123, 224) et configuré pour commander une fréquence alternative d'un courant de détection de l'élément de chauffage (122, 223, 33).

7. Circuit de chauffage selon la revendication 1, dans lequel l'élément de détection (123, 224) comporte une première résistance (R1) et une deuxième résistance (R2), et le sous-circuit (12, 22) comporte un troisième transistor MOS à métal-oxyde semiconducteur et un quatrième transistor MOS, la première résistance (R1) est connectée entre un drain du troisième transistor MOS et la deuxième alimentation électrique (14, 24, 37), la deuxième résistance (R2) est connectée entre une source du quatrième transistor MOS et un point de masse, une source du troisième transistor MOS est connectée à un drain du quatrième transistor MOS et au module de commutation (121), respectivement, et la deuxième résistance (R2) détecte, sur la base de l'alimentation fournie par la deuxième alimentation électrique (14, 24, 37), la résistance de l'élément chauffant (122, 223, 33).

8. Circuit de chauffage selon l'une quelconque des revendications 1 à 5 et la revendication 7, dans lequel la première alimentation électrique (13, 23, 36) est une alimentation électrique fournissant une première tension, la deuxième alimentation électrique (14, 24, 37) est une alimentation électrique fournissant une deuxième tension, et la première tension est supérieure à la deuxième tension, ou, en réponse au fait que la première alimentation électrique (13, 23, 36) alimente l'élément chauffant (122, 223, 33) par le biais de la première boucle de conduction, un courant circulant à travers l'élément chauffant (122, 223, 33) est un premier courant, en réponse au fait que la deuxième alimentation électrique (14, 24, 37) alimente l'élément chauffant (122, 223, 33) par le biais de la deuxième boucle de conduction, un courant circulant à travers l'élément chauffant (122, 223, 33) est un deuxième courant, et le premier courant est supérieur au deuxième courant.

9. Circuit de chauffage selon la revendication 1, dans lequel le circuit inverseur (11, 21, 31) comporte un premier transistor bipolaire à porte isolée IGBT et un deuxième IGBT, un collecteur du premier IGBT est connecté à la première alimentation électrique (13, 23, 36), et un émetteur du premier IGBT est connecté au module de commutation (121) et à un collecteur du deuxième IGBT, respectivement, et un émetteur du deuxième IGBT est mis à la masse.

10. Circuit de chauffage selon la revendication 1, comportant par ailleurs : un deuxième condensateur (C2) connecté entre l'élément chauffant (122, 223, 33) et un point de masse, en réponse au fait que le module de commutation (121) est placé dans le premier état de commutation, le deuxième condensateur (C2) est configuré pour commander une fréquence alternative d'un courant de chauffage de l'élément chauffant (122, 223, 33), et en réponse au fait que le module de commutation (121) est placé dans le deuxième état de commutation, le deuxième condensateur (C2) est configuré pour commander une fréquence alternative d'un courant de détection de l'élément chauffant (122, 223, 33).
